(19) Europäisches Patentamt
European Patent Office
Office européen des brevets

(11) **EP 4 456 580 A1**

(12) **EUROPEAN PATENT APPLICATION**
published in accordance with Art. 153(4) EPC

(43) Date of publication:
**30.10.2024 Bulletin 2024/44**

(21) Application number: **22920118.1**

(22) Date of filing: **30.12.2022**

(51) International Patent Classification (IPC):
**H04W 12/03** (2021.01)    **H04W 12/041** (2021.01)

(52) Cooperative Patent Classification (CPC):
**H04L 9/08; H04L 27/26; H04W 12/03;**
**H04W 12/041**

(86) International application number:
**PCT/CN2022/144363**

(87) International publication number:
**WO 2023/134488 (20.07.2023 Gazette 2023/29)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **11.01.2022 CN 202210029075**

(71) Applicant: **Huawei Technologies Co., Ltd.**
**Shenzhen, Guangdong 518129 (CN)**

(72) Inventors:
• LIU, Peng
Shenzhen, Guangdong 518129 (CN)
• JIN, Jiaxin
Shaanxi 710049 (CN)
• WANG, Huiming
Shaanxi 710049 (CN)
• ZHANG, Yuge
Shaanxi 710049 (CN)

(74) Representative: **Gill Jennings & Every LLP**
**The Broadgate Tower**
**20 Primrose Street**
**London EC2A 2ES (GB)**

(54) **COMMUNICATION METHOD AND APPARATUS**

(57)    A communication method and an apparatus are provided. The method includes: A first communication apparatus modulates a first signal based on waveform information, to obtain a second signal. The waveform information includes a first waveform parameter, and the first waveform parameter is non-public. The first communication apparatus sends the second signal to a second communication apparatus. According to the method, the first communication apparatus modulates the first signal based on the non-public waveform parameter, to obtain the second signal, and sends the second signal to the second communication apparatus, so that security of signal transmission can be improved, and it is difficult for an unlicensed device to learn of the signal.

FIG. 4A

FIG. 4B

**(Cont. next page)**

First communication apparatus

Second communication apparatus

S401A: Modulate a first signal based on waveform information, to obtain a second signal

S402A: Send the second signal (which passes through a transmission channel to be a third signal)

S403A: Demodulate the third signal based on the waveform information, to obtain a fourth signal

FIG. 4A

First communication apparatus

Second communication apparatus

S401B: Encrypt a waveform parameter by using a first key, to obtain an encrypted waveform parameter

S402B: Encrypted waveform parameter

S403B: Decrypt the encrypted waveform parameter by using the first key, to obtain the waveform parameter

FIG. 4B

**Description**

**CROSS-REFERENCE TO RELATED APPLICATIONS**

This application claims priority to Chinese Patent Application No. 202210029075.7, filed with the China National Intellectual Property Administration on January 11, 2022 and entitled "COMMUNICATION METHOD AND APPARATUS", which is incorporated herein by reference in its entirety.

**TECHNICAL FIELD**

This application relates to the field of wireless communication, and in particular, to a communication method and an apparatus.

**BACKGROUND**

In the communication field, a signal may serve as a carrier for carrying a message or data. For example, an electrical signal may represent different messages based on amplitude, frequency, or phase changes. The signal may further be used in the field of communication sensing, for example, ranging, speed measurement, and the like.

However, waveforms of some signals are predictable. This causes a problem that security of the signals is low. For example, an attacker may send a ranging sequence to a receiving end in an illegal manner in advance. For example, if sending a sequence whose length is N, the attacker may first observe continuous first M (where M is a positive integer) samples, and then predict the remaining symbols during duration of P (where P is a positive integer) orthogonal frequency division multiplexing (orthogonal frequency division multiplexing, OFDM) symbols, so that the attacker can transmit a legal OFDM waveform in advance. In this case, it is measured that round-trip time between the attacker and the receiving end is reduced, and it is calculated that a distance between the attacker and the receiving end is less than an actual distance. Finally, the receiving end may be attacked.

Therefore, a communication method needs to be urgently proposed, to improve security of signal transmission.

**SUMMARY**

According to a communication method and an apparatus, security of signal transmission can be improved.

According to a first aspect, an implementation of this application provides a communication method. The method may be performed by a first communication apparatus, may be performed by a processor on a first communication apparatus, or may be performed by a chip provided with a processor. This is not limited herein. The method specifically includes the following steps: A first communication apparatus modulates a first signal based on waveform information, to obtain a second signal. The waveform information includes a first waveform parameter, and the first waveform parameter is non-public. The first communication apparatus sends the second signal to a second communication apparatus.

In this application, the waveform parameter included in the waveform information is non-public (also referred to as uncommon) or private to a device other than the first communication apparatus and the second communication apparatus. The waveform parameter is public to a licensed device, and is non-public to an unlicensed device. The licensed device may include the first communication apparatus and the second communication apparatus, or may include a device group to which the first communication apparatus belongs and a device group to which the second communication apparatus belongs. Alternatively, the waveform parameter may be device-specific (or dedicated) (device-specific) or device group-specific (group-specific). For example, the waveform parameter is specific to the first communication apparatus and the second communication apparatus, and an apparatus other than the first communication apparatus and the second communication apparatus cannot learn of the waveform parameter. Alternatively, the waveform parameter is specific to a device group corresponding to the first communication apparatus and a device group corresponding to the second communication apparatus, and an apparatus in another device group cannot learn of the waveform parameter.

In addition, the waveform parameter in the waveform information in this embodiment of this application may be a parameter in the following modulation matrix. Because the modulation matrix is used in a signal modulation process, the waveform parameter in the waveform information may affect a phase of a modulated signal. Because the waveform parameter in the waveform information is non-public or private, the modulation matrix in this application is also non-public or private to the unlicensed device.

In this implementation, the first communication apparatus modulates the first signal based on the non-public waveform parameter, to obtain the second signal, and sends the second signal to the second communication apparatus, so that security of signal transmission can be improved, and it is difficult for the unlicensed device to learn of the signal.

In a possible implementation, the second signal is used to perform communication sensing.

Communication sensing in this application may be performing measurement of a task by using a signal. Specifically, the task may include ranging, speed measurement, and the like.

For example, the second signal is used for ranging. Because the waveform parameter included in the waveform information is non-public to the device other than the first communication apparatus and the second communication apparatus, when a signal used for ranging is modulated between the first communication apparatus and the second communication apparatus based on the waveform parameter, security of signal transmission can be improved, and it is difficult for another unlicensed device to learn of the signal. In this way, security of ranging can be improved.

In a possible implementation, the waveform information further includes a second waveform parameter, and the first waveform parameter is non-public.

In this implementation, a quantity of waveform parameters in the waveform information may be flexibly set according to actual requirements. Further, transmission security of the second signal obtained by modulating the first signal based on the waveform information is higher.

In a possible implementation, before that the first communication apparatus sends the second signal to a second communication apparatus, the method further includes the following.

The first communication apparatus encrypts the first waveform parameter by using a first key, to obtain an encrypted first waveform parameter. The first communication apparatus sends the encrypted first waveform parameter to the second communication apparatus.

Optionally, the first communication apparatus further encrypts the second waveform parameter in the waveform information by using the first key, to obtain an encrypted second waveform parameter. The first communication apparatus sends the encrypted second waveform parameter to the second communication apparatus.

In this implementation, the first communication apparatus can effectively encrypt waveform parameters in the waveform information by using the first key, to ensure transmission security of the waveform parameters in the waveform information.

In this embodiment of this application, that the first communication apparatus encrypts the first waveform parameter by using a first key, to obtain an encrypted first waveform parameter may include but is not limited to the following two encryption implementations.

In a first encryption implementation, the first communication apparatus performs quantization on the first waveform parameter, to obtain a first waveform parameter sequence. The first communication apparatus encrypts the first waveform parameter sequence by using a part of the first key as an encryption key, to obtain an encrypted first waveform parameter sequence.

Optionally, the first communication apparatus further indicates a start bit of the encryption key in the first key to the second communication apparatus. The indication is used, so that the second communication apparatus can effectively and accurately learn of the encryption key that is of the first waveform parameter sequence and that is in the first key.

For example, the first communication apparatus encrypts a first sequence by using the first key, to obtain an encrypted first sequence. The first sequence indicates the start bit of the key that is used to encrypt the first waveform parameter sequence and that is in the first key. The first communication apparatus sends the encrypted first sequence to the second communication apparatus. In this manner, the first communication apparatus can securely and accurately indicate, to the second communication apparatus, a key part that is of the first key and that is used to encrypt the first waveform parameter sequence.

It should be understood that, that the first sequence indicates the start bit of the encryption key that is of the first waveform parameter sequence and that is in the first key is not limited in this application. The start bit may alternatively be indicated in another manner. For example, a first message may indicate the start bit of the encryption key that is of the first waveform parameter sequence and that is in the first key. Therefore, the first communication apparatus may further encrypt the first message by using the first key (or another key), and then send an encrypted first message to the second communication apparatus, and the second communication apparatus decrypts the encrypted first message by using the first key (or another corresponding key), to obtain the first message.

In a possible implementation, the first communication apparatus and the second communication apparatus may further determine, in a manner agreed upon by the first communication apparatus and the second communication apparatus (or set in advance), a specific part of the first key to be used as the encryption key or a decryption key. In other words, the first communication apparatus selects the encryption key from the first key according to the mutual agreement, to encrypt the first waveform parameter sequence. Correspondingly, the second communication apparatus may also select the accurate decryption key from the first key according to the mutual agreement, to decrypt the encrypted first waveform parameter sequence.

In a second encryption implementation, the first communication apparatus performs quantization on the first waveform parameter, to obtain a first waveform parameter sequence. The first communication apparatus performs cycling on the first waveform parameter sequence, to obtain a third waveform parameter sequence. The first communication apparatus encrypts the third waveform parameter sequence by using the first key, to obtain an encrypted third waveform parameter sequence. It should be noted that a length of the third waveform parameter sequence should be the same as a length of the first key.

When the first communication apparatus encrypts another waveform parameter (for example, the second waveform parameter) in the waveform information, an encryption manner the same as that of the first waveform parameter may also be used, or another encryption manner may be used. This is not specifically limited in this application.

In the foregoing two encryption implementations, the first communication apparatus can effectively encrypt the waveform parameter in the waveform information, to ensure that the waveform parameter is securely transmitted to the second communication apparatus.

In a possible implementation, the waveform parameter in the waveform information in this application may be a randomly variable parameter, or may be a fixed parameter. For example, for the randomly variable waveform parameter in the waveform information, a first device may update the waveform parameter in real time based on an actual modulation requirement, to obtain an updated waveform parameter, and transmit the updated waveform parameter to a second device in the foregoing encrypted form. Details are not described herein again.

In a possible implementation, a length of the first waveform parameter sequence is 14 bits. A length of a second waveform parameter sequence is 14 bits.

Optionally, the first waveform parameter sequence and the second waveform parameter sequence may be binary vectors or arrays. Therefore, a specific form of a sequence of a quantized waveform parameter is not limited in this application.

In this implementation, when the length of the sequence of the first waveform parameter in the waveform information and the length of the sequence of the second waveform parameter in the waveform information are 14 bits respectively, it may be very difficult to crack a signal modulated based on the waveform parameter, so that security of modulating the first signal based on the waveform information is high.

In a possible implementation, a length of the first key is 256 bits or 128 bits.

In this implementation, the first communication apparatus can effectively encrypt the first waveform parameter sequence and the second waveform parameter sequence by using the first key.

In a possible implementation, that a first communication apparatus modulates a first signal based on waveform information, to obtain a second signal includes: The first communication apparatus performs constellation mapping on the first signal, to obtain a first signal obtained through the constellation mapping. The first communication apparatus modulates, by using a modulation matrix, the first signal obtained through the constellation mapping, to obtain the second signal. A parameter of the modulation matrix includes the first waveform parameter and a second waveform parameter.

In this implementation, the first communication apparatus can effectively modulate the first signal, so that security of the second signal obtained through modulation is high.

In a possible implementation, the modulation matrix meets the following formula:

$$\Phi_{M \times N}(c1, c2) = e^{j2\pi(c1m^2 + c2n^2 + nm/N)}/\sqrt{N}$$

$\Phi_{M \times N}(c1, c2)$ represents the modulation matrix, $M \times N$ represents a size of the modulation matrix, both M and N are positive integers, $M$ is a quantity of rows of the modulation matrix, $N$ is a quantity of columns of the modulation matrix, $m$ is a row index of the modulation matrix, $n$ is a column index of the modulation matrix, c1 is the first waveform parameter, c2 is the second waveform parameter, and $j$ is a unit of an imaginary part.

In this implementation, security of the modulation matrix may be high, so that security of a signal modulated by using the modulation matrix is also high.

According to a second aspect, an implementation of this application provides a communication method. The method may be performed by a second communication apparatus, may be performed by a processor on a second communication apparatus, or may be performed by a chip provided with a processor. This is not limited herein. The method specifically includes the following steps: A second communication apparatus receives a third signal from a first communication apparatus. The third signal is a signal obtained after a second signal passes through a transmission channel. The second signal is obtained by modulating a first signal based on waveform information. The waveform information includes a first waveform parameter, and the first waveform parameter is non-public. The second communication apparatus demodulates the third signal based on the waveform information, to obtain a fourth signal.

That the waveform parameter in this embodiment of this application is non-public may mean that the waveform parameter is non-public to a device other than the first communication apparatus and the second communication apparatus, or may mean that the waveform parameter is non-public to an unlicensed device. The first communication apparatus and the second communication apparatus are licensed devices.

In this implementation, the second communication apparatus demodulates the third signal based on a corresponding non-public waveform parameter, so that the fourth signal can be securely and accurately obtained.

In a possible implementation, the fourth signal is used to perform communication sensing. For example, the fourth signal is used for ranging, speed measurement, and the like. In this implementation, the second communication apparatus can accurately learn of the fourth signal with high security, and security of communication sensing performed by using the fourth signal is also high.

In a possible implementation, before that the second communication apparatus demodulates the third signal based on the waveform information, to obtain a fourth signal, the method further includes the following.

Based on the foregoing first encryption implementation in which the first communication apparatus encrypts the first waveform parameter, the second communication apparatus receives an encrypted first waveform parameter sequence from the first communication apparatus. A first waveform parameter sequence is obtained by performing quantization on the first waveform parameter. The second communication apparatus decrypts the encrypted first waveform parameter sequence by using a first key, to obtain the first waveform parameter sequence, and converts the first waveform parameter sequence to obtain the first waveform parameter. Therefore, the second communication apparatus can accurately and securely obtain the waveform parameter from the first communication apparatus.

Optionally, before that the second communication apparatus decrypts the encrypted first waveform parameter sequence by using a first key, to obtain the first waveform parameter sequence, the method further includes: The second communication apparatus receives first indication information from the first communication apparatus. The first indication information is used to determine a start bit of a decryption key that is of the encrypted first waveform parameter sequence and that is in the first key.

For example, the second communication apparatus receives an encrypted first sequence from the first communication apparatus. The encrypted first sequence is obtained by encrypting a first sequence by using the first key. Because the first sequence indicates a start bit of a key that is used to encrypt the first waveform parameter sequence and that is in the first key. Correspondingly, the second communication apparatus may determine, based on the first sequence, the start bit that is of the decryption key of the encrypted first waveform parameter sequence and that is in the first key.

Optionally, the second communication apparatus further receives an encrypted second waveform parameter sequence from the first communication apparatus. Similarly, for an implementation in which the second communication apparatus decrypts the encrypted second waveform parameter sequence, refer to a manner of decrypting the encrypted first waveform parameter sequence. Details are not described herein again.

In this implementation, the second communication apparatus can securely and accurately decrypt the encrypted first waveform parameter sequence, to finally obtain the first waveform parameter (where a case is similar for another parameter in the waveform information).

Based on the foregoing second encryption implementation in which the first communication apparatus encrypts the first waveform parameter, the second communication apparatus receives an encrypted third waveform parameter sequence from the first communication apparatus. A third waveform parameter sequence is obtained based on cycling of a first waveform parameter sequence. The second communication apparatus decrypts the encrypted third waveform parameter sequence by using a first key, to obtain the third waveform parameter sequence. The second communication apparatus determines the first waveform parameter sequence from the third waveform parameter sequence, and converts the first waveform parameter sequence to obtain the first waveform parameter.

Optionally, the second communication apparatus further receives an encrypted second waveform parameter sequence from the first communication apparatus. Similarly, for an implementation in which the second communication apparatus decrypts the encrypted second waveform parameter sequence, refer to a manner of decrypting the encrypted first waveform parameter sequence. Details are not described herein again.

In this implementation, the second communication apparatus can securely and accurately obtain the first waveform parameter in the waveform information from the first communication apparatus, so that the obtained third signal can be effectively and accurately demodulated.

In a possible implementation, a length of the first waveform parameter sequence is 14 bits, and a length of a second waveform parameter sequence is 14 bits.

Optionally, the first waveform parameter sequence and the second waveform parameter sequence may be binary vectors or arrays. A specific form of a sequence of a quantized waveform parameter is not limited in this application.

In this implementation, when the length of the sequence of the first waveform parameter in the waveform information and the length of the sequence of the second waveform parameter in the waveform information are 14 bits respectively, it may be very difficult to crack a signal modulated based on the waveform parameter, so that security of demodulating the third signal based on the waveform information is high.

In a possible implementation, a length of the first key is 256 bits or 128 bits.

In this application, the length of the first key is selected as 256 bits or 128 bits. In this case, the first key can better adapt to a current protocol, to improve compatibility with the protocol. In actual application, the length of the first key may alternatively be another value. This is not specifically limited in this application.

In this implementation, the second communication apparatus can effectively decrypt the encrypted first waveform parameter sequence and the encrypted second waveform parameter sequence by using the first key.

In a possible implementation, that the second communication apparatus demodulates the third signal based on the waveform information, to obtain a fourth signal includes: The second communication apparatus demodulates the third signal by using a demodulation matrix, to obtain a demodulated third signal. A parameter of the demodulation matrix includes the first waveform parameter and a second waveform parameter. The second communication apparatus performs constellation mapping on the demodulated third signal, to obtain the fourth signal.

In this implementation, after obtaining the waveform parameter in the waveform information, the second communication apparatus can effectively demodulate the third signal by accurately using the waveform parameter in the waveform information, and can effectively and securely obtain the fourth signal.

Because the fourth signal is essentially the same as the first signal, but there may be a specific phase error, communication sensing may be performed by using the phase error. For example, the second communication apparatus may calculate a delay based on a phase error between the fourth signal and the second signal, and then obtain, through calculation, a distance between the first communication apparatus and the second communication apparatus by using the delay. Therefore, according to the foregoing method, security of ranging between the first communication apparatus and the second communication apparatus can be improved.

According to a third aspect, an embodiment of this application further provides a communication apparatus. The communication apparatus may be used in the first communication apparatus according to the first aspect. The communication apparatus may be a terminal device or a network device, may be an apparatus (for example, a chip, a chip system, or a circuit) in a terminal device or a network device, or may be an apparatus that can be used together with a terminal device or a network device. In a possible implementation, the communication apparatus may include a one-to-one corresponding module or unit for performing the method/operation/step/action described in the first aspect. The module or unit may be implemented by a hardware circuit, software, or a combination of a hardware circuit and software. In a possible implementation, the communication apparatus may include a processing unit and a transceiver unit. The processing unit is configured to invoke the transceiver unit to perform a receiving function and/or a sending function.

In a possible implementation, the communication apparatus includes a transceiver module and a processing module. The processing module is configured to modulate a first signal based on waveform information, to obtain a second signal. The waveform information includes a first waveform parameter, and the first waveform parameter is non-public. The transceiver module is configured to send the second signal to a second communication apparatus.

In a possible implementation, the processing module is further configured to: before the transceiver module sends the second signal to the second communication apparatus, encrypt the first waveform parameter by using a first key, to obtain an encrypted first waveform parameter; and send the encrypted first waveform parameter to the second communication apparatus via the transceiver module.

In a possible implementation, when encrypting the first waveform parameter by using the first key, to obtain the encrypted first waveform parameter, the processing module is specifically configured to: The first communication apparatus performs quantization on the first waveform parameter, to obtain a first waveform parameter sequence. The first communication apparatus encrypts the first waveform parameter sequence by using a part of the first key as an encryption key, to obtain an encrypted first waveform parameter sequence.

In a possible implementation, the transceiver module is further configured to indicate a start bit of the encryption key in the first key to the second communication apparatus.

In a possible implementation, when encrypting the first waveform parameter by using the first key, to obtain the encrypted first waveform parameter, the processing module is specifically configured to: perform quantization on the first waveform parameter, to obtain a first waveform parameter sequence; perform cycling on the first waveform parameter sequence, to obtain a third waveform parameter sequence; and encrypt the third waveform parameter sequence by using the first key, to obtain an encrypted third waveform parameter sequence.

In a possible implementation, a length of the first waveform parameter sequence is 14 bits.

In a possible implementation, a length of the first key is 256 bits or 128 bits.

In a possible implementation, when modulating the first signal based on the waveform information, to obtain the second signal, the processing module is specifically configured to: perform constellation mapping on the first signal, to obtain a first signal obtained through the constellation mapping; and modulate, by using a modulation matrix, the first signal obtained through the constellation mapping, to obtain the second signal. A parameter of the modulation matrix includes the first waveform parameter and a second waveform parameter.

Optionally, the modulation matrix meets the following formula:

$$\Phi_{M \times N}(c1, c2) = e^{j2\pi(c1m^2 + c2n^2 + nm/N)} / \sqrt{N}$$

$\Phi_{M \times N}(c1, c2)$ represents the modulation matrix, $M \times N$ represents a size of the modulation matrix, both M and N are positive integers, $M$ is a quantity of rows of the modulation matrix, $N$ is a quantity of columns of the modulation matrix, $m$ is a row index of the modulation matrix, $n$ is a column index of the modulation matrix, c1 is the first waveform parameter, c2 is the second waveform parameter, and $j$ is a unit of an imaginary part.

In a possible implementation, the waveform information further includes the second waveform parameter, and the second waveform parameter is non-public.

According to a fourth aspect, an embodiment of this application further provides a communication apparatus. The communication apparatus may be used in the second communication apparatus according to the second aspect. The communication apparatus may be a terminal device or a network device, may be an apparatus (for example, a chip, a chip system, or a circuit) in a terminal device or a network device, or may be an apparatus that can be used together with a terminal device or a network device. In a possible implementation, the communication apparatus may include a one-to-one corresponding module or unit for performing the method/operation/step/action described in the second aspect. The module or unit may be implemented by a hardware circuit, software, or a combination of a hardware circuit and software. In a possible implementation, the communication apparatus may include a processing unit and a transceiver unit. The processing unit is configured to invoke the transceiver unit to perform a receiving function and/or a sending function.

In a possible implementation, the communication apparatus includes a transceiver module and a processing module. The transceiver module is configured to receive a third signal from a first communication apparatus. The third signal is a signal obtained after a second signal passes through a transmission channel. The second signal is obtained by modulating a first signal based on waveform information. The waveform information includes a first waveform parameter, and the first waveform parameter is non-public. The processing module is configured to demodulate the third signal based on the waveform information, to obtain a fourth signal.

In a possible implementation, the processing module is further configured to: before the processing module demodulates the third signal based on the waveform information, to obtain the fourth signal, receive, via the transceiver module, an encrypted first waveform parameter sequence from the first communication apparatus, where a first waveform parameter sequence is obtained by performing quantization on the first waveform parameter; and decrypt the encrypted first waveform parameter sequence by using a first key, to obtain the first waveform parameter sequence, and convert the first waveform parameter sequence to obtain the first waveform parameter.

In a possible implementation, the transceiver module is further configured to: before the processing module decrypts the encrypted first waveform parameter sequence by using the first key, obtain first indication information from the first communication apparatus. The first indication information is used to determine a start bit of a decryption key that is of the encrypted first waveform parameter sequence and that is in the first key.

In a possible implementation, the processing module is further configured to: receive, via the transceiver module, an encrypted third waveform parameter sequence from the first communication apparatus, where a third waveform parameter sequence of the third waveform parameter is obtained based on cycling of a first waveform parameter sequence, and the first waveform parameter sequence is obtained by performing quantization on the first waveform parameter; decrypt the encrypted third waveform parameter sequence by using a first key, to obtain the third waveform parameter sequence; and determine the first waveform parameter sequence from the third waveform parameter sequence, and convert the first waveform parameter sequence to obtain the first waveform parameter.

In a possible implementation, a length of the first waveform parameter sequence is 14 bits.

In a possible implementation, a length of the first key is 256 bits or 128 bits.

In a possible implementation, when demodulating the third signal based on the waveform information, to obtain the fourth signal, the processing module is specifically configured to: demodulate the third signal by using a demodulation matrix, to obtain a demodulated third signal, where a parameter of the demodulation matrix includes the first waveform parameter and a second waveform parameter; and perform constellation mapping on the demodulated third signal, to obtain the fourth signal.

In a possible implementation, the waveform information further includes the second waveform parameter, and the second waveform parameter is non-public.

According to a fifth aspect, an implementation of this application provides a communication apparatus. The communication apparatus includes a processor coupled to a storage. The storage stores a computer program or computer instructions. The processor is configured to invoke and run the computer program or the computer instructions stored in the storage, so that the processor implements the first aspect or any one of the possible implementations of the first aspect, or the processor implements the second aspect or any one of the possible implementations of the second aspect.

Optionally, the communication apparatus further includes the storage. Optionally, the storage is integrated with the processor.

Optionally, the communication apparatus further includes a transceiver. The processor is configured to control the transceiver to receive and send signals and/or information and/or data, and/or the like.

According to a sixth aspect, an implementation of this application provides a communication apparatus. The communication apparatus includes a processor. The processor is configured to invoke a computer program or computer instructions in a storage, so that the processor implements the first aspect or any one of the possible implementations of the first aspect, or the processor is configured to perform the second aspect or any one of the possible implementations of the second aspect.

The communication apparatus further includes a transceiver. The processor is configured to control the transceiver to receive and send signals and/or information and/or data, and/or the like.

According to a seventh aspect, an implementation of this application provides a communication apparatus. The communication apparatus includes a processor. The processor is configured to perform the first aspect or any one of the possible implementations of the first aspect, or the processor is configured to perform the second aspect or any one of the possible implementations of the second aspect.

According to an eighth aspect, an implementation of this application further provides a computer program product including instructions. When the instructions are run on a computer, the computer is enabled to perform the first aspect or any one of the possible implementations of the first aspect, or the computer is enabled to perform the second aspect or any one of the possible implementations of the second aspect.

According to a ninth aspect, an implementation of this application further provides a computer-readable storage medium, including computer instructions. When the instructions are run on a computer, the computer is enabled to perform the first aspect or any one of the possible implementations of the first aspect, or the computer is enabled to perform the second aspect or any one of the possible implementations of the second aspect.

According to a tenth aspect, an implementation of this application further provides a chip apparatus, including a processor. The processor is configured to invoke a computer program or computer instructions in a storage, so that the processor performs the first aspect or any one of the possible implementations of the first aspect, or the processor performs the second aspect or any one of the possible implementations of the second aspect.

Optionally, the processor is coupled to the storage through an interface.

For technical effects that can be achieved in the third aspect or any one of the possible implementations of the third aspect, refer to descriptions of technical effects that can be achieved in the first aspect or any one of the possible implementations of the first aspect. For technical effects that can be achieved in the fourth aspect or any one of the possible implementations of the fourth aspect, refer to descriptions of technical effects that can be achieved in the second aspect or any one of the possible implementations of the second aspect. Details are not described herein again.

## BRIEF DESCRIPTION OF DRAWINGS

FIG. 1 is a diagram of a communication system to which a communication method of a ranging principle is applicable according to an embodiment of this application;
FIG. 2 is a diagram of an early detection and late commit attack according to an embodiment of this application;
FIG. 3 is a diagram of a waveform of an early detection and late commit attack according to an embodiment of this application;
FIG. 4A is a diagram of interaction of a communication method according to an embodiment of this application;
FIG. 4B is a diagram of interaction of an encryption method according to an embodiment of this application;
FIG. 5A is a diagram of interaction of a specific encryption embodiment according to an embodiment of this application;
FIG. 5B is a diagram of a structure of a message sequence according to an embodiment of this application;
FIG. 6A is a diagram of interaction of another specific communication embodiment according to an embodiment of this application;
FIG. 6B is a diagram of a structure of a third waveform parameter sequence according to an embodiment of this application;
FIG. 7A is a diagram of comparison of a simulation experiment result according to an embodiment of this application;
FIG. 7B is a diagram of comparison of another simulation experiment result according to an embodiment of this application;
FIG. 7C is a diagram of comparison of still another simulation experiment result according to an embodiment of this application;
FIG. 8A is a diagram of interaction of still another specific embodiment according to an embodiment of this application;
FIG. 8B is a schematic flowchart of signal modulation and demodulation according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a simplified structure of a chip according to an embodiment of this application.

**DESCRIPTION OF EMBODIMENTS**

Embodiments of this application provide a communication method and an apparatus. The method and the apparatus are based on a same or similar technical concept. Because the method and the apparatus have similar problem-resolving principles, mutual reference may be made to implementations of the apparatus and the method. Repeated parts are not described again.

For ease of understanding the technical solutions in embodiments of this application, the following first briefly describes an existing ranging principle.

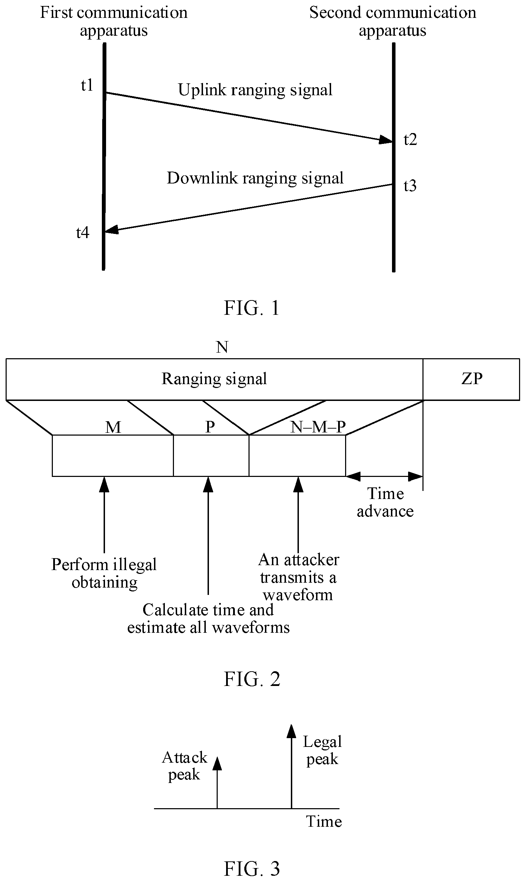

Refer to FIG. 1. A first communication apparatus sends an uplink ranging signal to a second communication apparatus at a time point 11. The uplink ranging signal arrives at the second communication apparatus at a time point t2. After receiving the uplink ranging signal, the second communication apparatus processes the uplink ranging signal, and sends a downlink ranging signal to the first communication apparatus at a time point t3. The downlink ranging signal arrives at the first communication apparatus at a time point t4. Therefore, a distance between the first communication apparatus and the second communication apparatus may be obtained through calculation by using round-trip time of the ranging signals. Specifically, the distance d between the first communication apparatus and the second communication apparatus meets the following formula:

$$d = \frac{t_{RTT}}{2} c$$

$t_{RTT}$ represents round-trip time of transmission between the first communication apparatus and the second communication apparatus, $t_{RTT} = (t4 - t1) - (t3 - t2)$, and $c$ represents a transmission speed of the ranging signal.

In a ranging process, an attacker may send a ranging signal to a receiving end in an illegal manner in advance, so that the ranging signal arrives at the receiving end in advance. This attack manner may be referred to as an early detection and late commit (early detection and late commit, EDLC) attack, and this attack mainly uses a structural characteristic of the signal. For example, the ranging signal may be an OFDM waveform, and a structure of the ranging signal is shown in FIG. 2. A length of an entire ranging signal is N. An attacker observes continuous first M symbols, and spends duration of P OFDM symbols to predict the remaining (N-M-P) symbols. The attacker transmits a legal OFDM waveform duration of L symbols earlier to attack a receiver machine. For example, the attacker observes first M sampling points to predict an entire OFDM waveform according to a Viterbi decoding algorithm. In this way, arrival time of the ranging signal is advanced, in other words, the time point t2 and the time point t4 in FIG. 1 are advanced. As a result, the measured round-trip time $t_{RTT}$ of the message is reduced, and the calculated distance d is less than an actual distance, to implement attack, as shown in FIG. 3. It should be understood that N, P, M, and L are all positive integers.

It can be learned from the foregoing descriptions that, for a problem that security of a signal is low because a waveform of an existing signal used for communication sensing (for example, the foregoing ranging) is predictable, a communication method needs to be urgently proposed, to improve security of signal transmission, and further ensure security of communication sensing implemented by using the signal.

Therefore, this application provides a communication method. The method includes: A first communication apparatus modulates a first signal based on waveform information, to obtain a second signal. The waveform information includes a first waveform parameter, and the first waveform parameter is non-public. The first communication apparatus sends the second signal to a second communication apparatus. According to the method, the first communication apparatus modulates the first signal based on the non-public waveform parameter, to obtain the second signal, and sends the second signal to the second communication apparatus, so that security of signal transmission can be improved, and it is difficult for an unlicensed device to learn of the signal.

The technical solutions in this application may be applied to a cellular system related to a 3rd generation partnership project (3rd generation partnership project, 3GPP), for example, a long term evolution (long term evolution, LTE) system and other 4th generation (4th generation, 4G) communication systems, a new radio (new radio, NR) system and other 5th generation (5th generation, 5G) communication systems, or a 6th generation (6th generation, 6G) communication system and other evolved communication systems after 5G, or may be applied to a narrow band-internet of things (narrow band-internet of things, NB-IoT) system, a satellite communication system, or a wireless fidelity (wireless fidelity, Wi-Fi) system, or a communication system that supports convergence of a plurality of wireless technologies.

The communication system to which this application is applicable includes the first communication apparatus and the second communication apparatus. The first communication apparatus may serve as a transmitting end or a receiving end, and the second communication apparatus may also serve as a transmitting end. The first communication apparatus may be a network device or a terminal device, and the second communication apparatus may be a network device or a terminal device. When the first communication apparatus may be a network device as the transmitting end, the second communication apparatus may be a terminal device as the receiving end. Alternatively, when the first communication apparatus may be a terminal device as the transmitting end, the second communication apparatus may be a network device as the receiving end. When the first communication apparatus may be a terminal device as the transmitting end, the second communication apparatus may be a terminal device as the receiving end. This is not limited in this application.

The terminal device is a device that has a wireless connection function and that can provide voice and/or data connectivity for a user, and may also be referred to as a station, user equipment (user equipment, UE), a mobile station (mobile station, MS), a mobile terminal (mobile terminal, MT), a wireless communication device, or the like.

The terminal device is a device that includes a wireless communication function (providing voice/data connectivity for a user), for example, a handheld device, a vehicle-mounted device, or the like that has a wireless connection function.

Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, personal digital assistant (personal digital assistant, PDA), a handheld device with a wireless communication function, a computing device, another processing device connected to a wireless modem, a vehicle-mounted device, a communication device carried on a high-altitude aircraft, a wearable device, an uncrewed aerial vehicle, a robot, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, an apparatus configured to implement a function of the terminal device may be a terminal device, or may be an apparatus that can support the terminal device in implementing the function, for example, a chip system. The apparatus may be mounted in the terminal device or used together with the terminal device. In embodiments of this application, the chip system may include a chip, or may include a chip and another discrete component.

The network device is a device for connecting the terminal device to a wireless network in the communication system, and may also be referred to as a radio access network (radio access network, RAN) node (or device), a base station, an access point, or the like. The network device may be a gNB, a transmission reception point (transmission reception point, TRP), an evolved NodeB (evolved NodeB, eNB), a radio network controller (radio network controller, RNC), or a home base station (e.g., home evolved NodeB, or home NodeB, HNB), a baseband unit (baseband unit, BBU), a Wi-Fi access point, or an AP controller (AP controller, AC), and other interface devices that can work in a wireless environment.

The network device may be an evolved NodeB (evolved NodeB, eNB, or eNodeB) in LTE, a next generation NodeB (next generation NodeB, gNB) in a 5G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include various forms of base stations, for example, a macro base station, a micro base station (also referred to as a small cell), a relay station, an access point, a device that implements a base station function in a evolved communication system after 5G, an access point (access point, AP) in a Wi-Fi system, a transmission point (transmission point, TP), a mobile switching center, a device that undertakes a base station function in device-to-device (Device-to-Device, D2D), vehicle-to-everything (vehicle-to-everything, V2X), and machine-to-machine (machine-to-machine, M2M) communication, or the like, or may further include a central unit (central unit, CU) and a distributed unit (distributed unit, DU) in a cloud access network (cloud radio access network, C-RAN) system, and a network device in a non-terrestrial communication network (non-terrestrial network, NTN) communication system, that is, may be deployed on a high-altitude platform or a satellite. This is not specifically limited in embodiments of this application.

In addition, in a network structure, the access point may include a CU node and a DU node. In this structure, protocol layers of the eNB in the LTE system are split, some protocol layer functions are controlled by the CU in a centralized manner, and some or all protocol layer functions are distributed in the DU, and the CU controls the DU in a centralized manner.

In embodiments of this application, an apparatus configured to implement a function of the network device may be a network device, or may be an apparatus that can support the network device in implementing the function, for example, a chip system. The apparatus may be mounted in the network device or used together with the network device. In embodiments of this application, the chip system may include a chip, or may include a chip and another discrete component.

In a possible implementation, the terminal device and the network device may communicate with each other through an air interface (Uu) link, a non-terrestrial network NTN communication link, or the like between the terminal device and the network device, and terminal devices may communicate with each other through a sidelink (sidelink, SL) such as D2D, or the like. Specifically, the terminal device may be in a connected state or an active (active) state, may be in a non-connected (inactive) state or an idle (idle) state, or may be in another state, for example, a state in which the terminal device is not attached to a network or does not perform downlink synchronization with a network.

Communication between a network device and a terminal device, between network devices, and between terminal devices may be performed by using a licensed spectrum, may be performed by using an unlicensed spectrum, or may be performed by using both a licensed spectrum and an unlicensed spectrum. Communication may be performed by using a spectrum below 6 gigahertz (gigahertz, GHz), for example, by using a 700/900 megahertz (megahertz, MHz) or a 2.1/2.6/3.5 GHz frequency band, or may be performed by using a spectrum above 6 GHz, for example, communication is performed by using a millimeter wave or a terahertz (terahertz, THz) wave, or communication may be performed by using a spectrum below 6 GHz and a spectrum above 6 GHz at the same time. A spectrum resource used for wireless communication is not specifically limited in embodiments of this application.

For ease of understanding the technical solutions of this application, the following describes some technical terms in this application.

(1) Signal

The signal is a physical quantity of a message, a tool for carrying a message, and a carrier of a message. For example, an electrical signal may represent different messages based on amplitude, frequency, or phase changes. Mathematically, the signal may be represented as a function of one or more variables (an independent variable may usually be time, or may be a height, a depth, or the like), and may generally include a continuous-time signal and a discrete-time signal. The continuous-time signal means that a definition domain of a signal function is continuous, and is usually represented by $x(t)$, where $x$ is a function of $t$ and is continuously changed. The discrete-time signal means that a value of a definition domain of a signal function whose is obtained only at a discrete time point, and is usually represented by $x|n|$, to be specific, $x$ is a function of a discrete variable $n$.

In a broad sense, the signal includes an optical signal, a sound signal, an electrical signal, and the like. Based on actual purposes, the signal includes a communication signal, a broadcast signal, a radar signal, and the like. Based on time characteristics, the signal includes a deterministic signal, a random signal, and the like.

(2) Waveform parameter

Generally, after a signal is converted into an electrical signal, a presented function curve of a voltage or a current that changes with time is a waveform. The waveform may include a sine wave, a square wave, a rectangular wave, a sawtooth wave, a pulse wave, and the like. A waveform parameter is mainly used to analyze the waveform. The waveform parameter may roughly include a time parameter and a voltage parameter. The time parameter may include a frequency, a periodicity, rise time, fall time, a duty cycle, and the like. The voltage parameter includes a maximum value, a minimum value, a peak value, a top value, and a bottom value.

Signal modulation is usually a process or a processing method that enables some characteristics of a waveform of a signal to change based on another waveform or signal. Signal demodulation is a process of recovering a message from a modulated signal carrying information. In other words, signal demodulation is an inverse process of signal modulation. The waveform parameter in this application is mainly used in a signal modulation process and a signal demodulation process.

(3) Inverse fast fourier transform (inverse fast fourier transform, IFFT)

Inverse fast fourier transform IFFT and fast fourier transform FFT correspond to each other. Fast fourier transform FFT transforms a signal from a time domain to a frequency domain. Inverse fast fourier transform IFFT transforms a frequency domain signal onto a time domain. In other words, inverse fast fourier transform IFFT is an inverse process of fast fourier transform FFT.

Fast fourier transform FFT is a fast algorithm of discrete fourier transform (discrete fourier transform, DFT). Specifically, an original sequence whose length is N is successively decomposed into a series of short sequences, then corresponding DFT of the series of short sequences is obtained based on a symmetric property and a periodic property of an exponential factor in a discrete fourier transform DFT calculation formula, and a proper combination is performed, to reduce repeated calculation and further reduce a multiplication operation and simplify a structure.

(4) Constellation mapping

The constellation mapping is mapping a bit sequence carrying digital information to obtain a symbol sequence suitable for transmission. The constellation mapping generally includes two elements: a constellation diagram (constellation) and a constellation point mapping (labeling) manner. The constellation diagram represents a set including all values of output symbols of the constellation mapping. Each point in the constellation diagram corresponds to a value of an output symbol. The constellation point mapping manner represents a specific mapping relationship from an input bit or a bit group to a constellation point, or a specific mapping relationship from a constellation point to a bit or a bit group. Each constellation point is in one-to-one correspondence with a bit group including one bit or a plurality of bits.

A constellation mapping method includes quadrature amplitude modulation (quadrature amplitude modulation, QAM) constellation mapping, quadrature phase shift keying (quadrature phase shift keying, QPSK) constellation mapping, and the like. A common constellation mapping method is QAM. The QAM is joint modulation of an amplitude and a phase. In other words, an amplitude and a phase of a modulated signal change with a change of a digital baseband signal. QAM using an M (M>2) number system may be denoted as M QAM (for example, 16 QAM, 64 QAM, or the like). A larger M indicates higher frequency band usage.

(5) "A plurality of" in embodiments of this application means two or more. The term "and/or" describes an association relationship between associated objects, and represents that three relationships may exist. For example, A and/or B may represent the following cases: Only A exists, both A and B exist, and only B exists. The character "/" generally represents an "or" relationship between the associated objects. In addition, it should be understood that in descriptions of this application, terms such as "first", "second", or the like are merely used for distinguishing and description, but should not be understood as indicating or implying relative importance, or should not be understood as indicating or implying a sequence.

(6) The terms "including", "having", and any other variant thereof mentioned in descriptions of embodiments of this application are intended to cover non-exclusive inclusion. For example, a process, a method, a system, a product, or a device that includes a series of steps or units is not limited to the listed steps or units, but optionally further includes other unlisted steps or units, or optionally further includes other steps or units inherent to the process, the method, the product, or the device. It should be noted that, in embodiments of this application, a word such as "example", "for example", or the like is used to represent giving an example, an illustration, or a description. Any embodiment or design solutions described as an "example" or "for example" in embodiments of this application should not be explained as being more preferred or having more advantages than another embodiment or design solutions. Exactly, use of the word such as "example", "for example", or the like is intended to present a related concept in a specific manner.

The technical solutions of this application are described below with reference to specific embodiments.

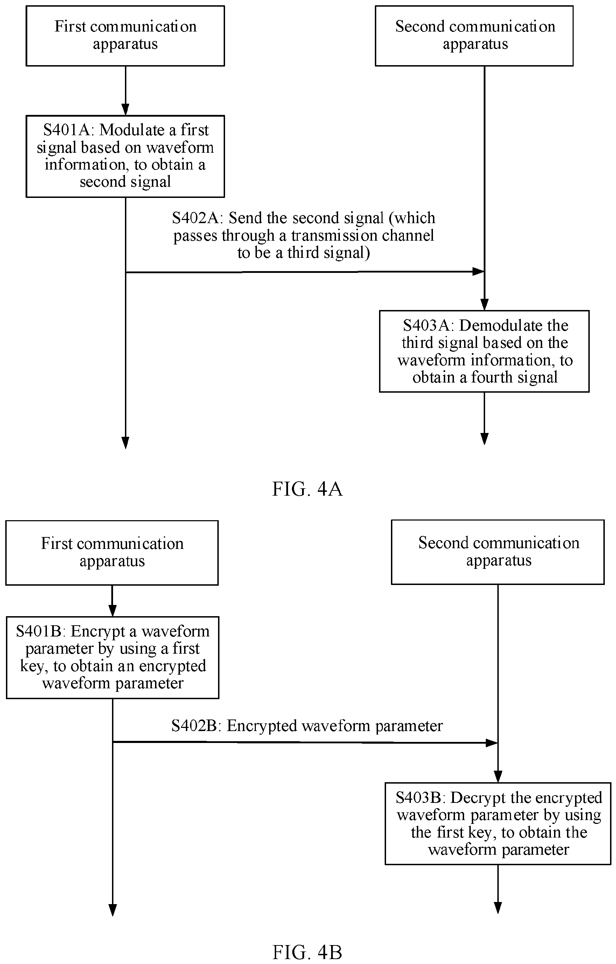

FIG. 4A is a schematic flowchart of a communication method according to an embodiment of this application. The communication method may be performed by a transceiver and/or a processor of a first communication apparatus (a second communication apparatus), or may be performed by a chip corresponding to the transceiver and/or the processor. Alternatively, this embodiment may be implemented by a controller or a control device connected to the first communication apparatus (the second communication apparatus). The controller or the control device is configured to manage at least one device including the first communication apparatus (the second communication apparatus). In addition, a specific form of the communication apparatus for performing this embodiment is not specifically limited in this application. Refer to FIG. 4A. A specific procedure of the method is as follows.

The following describes in detail, by using steps S401A to S403A, how the first communication apparatus and the second communication apparatus securely transmit a signal based on waveform information. Refer to FIG. 4A. The specific procedure of the method is as follows.

S401A: The first communication apparatus modulates a first signal based on waveform information, to obtain a second signal.

The waveform information includes a first waveform parameter, and the first waveform parameter is non-public. Optionally, the waveform information further includes a second waveform parameter, and the second waveform parameter is non-public.

In a possible implementation, before performing step S401A, the first communication apparatus first determines the waveform information.

In this application, the waveform parameter included in the waveform information is non-public (also referred to as uncommon) or private to a device other than the first communication apparatus and the second communication apparatus. The waveform parameter may be public to a licensed device, and be non-public to an unlicensed device. The licensed device may include the first communication apparatus and the second communication apparatus, or may include a device group to which the first communication apparatus belongs and a device group to which the second communication apparatus belongs. Alternatively, the waveform parameter may be device-only (or dedicated), device-specific (device-specific), or device group-specific (group-specific). For example, the waveform parameter is specific to the first communication apparatus and the second communication apparatus, and an apparatus other than the first communication apparatus and the second communication apparatus cannot learn of the waveform parameter. Alternatively, the waveform parameter is specific to a device group corresponding to the first communication apparatus and a device group corresponding to the second communication apparatus, and an apparatus in another device group cannot learn of the waveform parameter.

In addition, the waveform parameter in the waveform information in this embodiment of this application may be a parameter in the following modulation matrix. Because the modulation matrix is used in a signal modulation process, the waveform parameter in the waveform information may affect a phase of a modulated signal. Because the waveform parameter in the waveform information is non-public or private, the modulation matrix in this application may also be non-public or private to the unlicensed device.

In a possible implementation, when determining the waveform information, the first communication apparatus may generate the first waveform parameter and/or the second waveform parameter in a random manner or obtain the waveform parameter in another manner. This is not specifically limited in this application. In addition, a quantity of waveform parameters included in the waveform information is not specifically limited in this embodiment of this application, and may be generated by the first communication apparatus based on actual requirements. In addition, the waveform parameter in the waveform information may be a fixed parameter, or may be a randomly variable parameter. This is not specifically limited in this application.

In an implementation, that the first communication apparatus modulates a first signal based on waveform information, to obtain a second signal includes: The first communication apparatus performs constellation mapping on the first signal, to obtain a first signal obtained through the constellation mapping. The first communication apparatus modulates, by using a modulation matrix, the first signal obtained through the constellation mapping, to obtain the second signal. A parameter of the modulation matrix includes the first waveform parameter.

Optionally, the parameters of the modulation matrix further include the second waveform parameter.

For example, the modulation matrix may meet the following formula:

$$\Phi_{M \times N}(c1, c2) = e^{j2\pi(c1m^2 + c2n^2 + nm/N)} / \sqrt{N}$$

$\Phi_{M \times N}(c1, c2)$ represents the modulation matrix, $M \times N$ represents a size of the modulation matrix, both M and N are positive integers, $M$ is a quantity of rows of the modulation matrix, $N$ is a quantity of columns of the modulation matrix, $m$ is a row index of the modulation matrix, $n$ is a column index of the modulation matrix, c1 is the first waveform parameter, c2 is the second waveform parameter, and $j$ is a unit of an imaginary part.

S402A: The first communication apparatus sends the second signal to the second communication apparatus.

Correspondingly, the second communication apparatus receives a third signal from the first communication apparatus. The third signal is a signal obtained after the second signal passes through a transmission channel. The second signal is obtained by modulating the first signal based on the waveform information. The waveform information includes the first waveform parameter, and the first waveform parameter is non-public.

Optionally, the waveform information further includes the second waveform parameter, and the second waveform parameter is non-public.

S403A: The second communication apparatus demodulates the third signal based on the waveform information, to obtain a fourth signal.

Before performing step S403A, the second communication apparatus obtains the waveform information from the first communication apparatus. FIG. 4B shows a method procedure of waveform information transmission. Specifically, for how the first communication apparatus securely transmits the waveform information to the second communication apparatus, refer to the following embodiment in FIG. 4B. Details are not described herein again.

In an implementation, that the second communication apparatus demodulates the third signal based on the waveform information, to obtain a fourth signal includes: The second communication apparatus demodulates the third signal by using a demodulation matrix, to obtain a demodulated third signal. A parameter of the demodulation matrix includes the first waveform parameter and the second waveform parameter. The second communication apparatus performs constellation mapping on the demodulated third signal, to obtain the fourth signal.

In conclusion, this application provides a communication method. The method includes: The first communication apparatus modulates the first signal based on the waveform information, to obtain the second signal. The waveform information includes the first waveform parameter, and the first waveform parameter is non-public. The first communication apparatus sends the second signal to the second communication apparatus. According to the method, the first communication apparatus modulates the first signal based on the non-public waveform parameter, to obtain the second signal, and sends the second signal to the second communication apparatus, so that security of signal transmission can be improved, and it is difficult for an unlicensed device to learn of the signal. In this case, communication sensing, for example, ranging, speed measurement, and the like, is performed based on the signal with high security, so that security of the communication sensing can be ensured.

The following describes in detail, by using steps S401B to S403B, how the first communication apparatus transmits the waveform information to the second communication apparatus. Refer to FIG. 4B. A specific procedure of the method is as follows.

S401B: The first communication apparatus encrypts the waveform parameter by using a first key, to obtain an encrypted waveform parameter.

In an implementation, before the first communication apparatus performs step S401B, the method further includes: The first communication apparatus determines the waveform information. The waveform information includes the first waveform parameter, and the first waveform parameter is non-public.

Optionally, the waveform information further includes the second waveform parameter, and the first waveform parameter is non-public.

It should be understood that, in this application, that the waveform parameter in the waveform information is non-public may mean that the waveform parameter is non-public to a device other than the first communication apparatus and the second communication apparatus, or may mean that the waveform parameter is non-public to an unlicensed device. The first communication apparatus and the second communication apparatus are licensed devices.

In a possible implementation, when determining the waveform information, the first communication apparatus may generate the first waveform parameter and/or the second waveform parameter in a random manner, or obtain the waveform parameter in another manner. This is not specifically limited in this application. In addition, a quantity of waveform parameters included in the waveform information is not specifically limited in this embodiment of this application, and may be generated by the first communication apparatus based on actual requirements. In addition, the waveform parameter in the waveform information may be a fixed parameter, or may be a randomly variable parameter. This is not specifically limited in this application.

Optionally, the first key may be a preset key or a derived key, and a length of the first key is 256 bits or 128 bits.

In this application, the length of the first key is selected as 256 bits or 128 bits. In this case, the first key can better adapt to a current protocol, to improve compatibility with the protocol. In actual application, the length of the first key may alternatively be another value. This is not specifically limited in this application.

For example, the first key may be a key related to an encrypted ranging sequence in IEEE 802.11az, for example, Secure-LTF-Key-Seed or another key derived from a higher layer transient key (higher layer transient key, HLTK). The another key may be derived by using a message-digest algorithm 5 (message-digest algorithm 5, MD5), a secure hash algorithm 1 (secure hash algorithm 1, SHA-1), a secure hash algorithm SHA-256, a secure hash algorithm SHA-384, or other algorithms.

The first key used to encrypt the waveform parameter in this application may not be limited to the key in the foregoing example, or may be a key used in existing NR, or the like. A type of the first key is not specifically limited in this application.

When the first communication apparatus performs step S401B, step S401B may be specifically performed in, but not limited to, the following two encryption implementations.

In a first encryption implementation, that the first communication apparatus encrypts the first waveform parameter, to obtain an encrypted first waveform parameter may specifically include: The first communication apparatus performs quantization on the first waveform parameter, to obtain a first waveform parameter sequence. The first communication apparatus encrypts the first waveform parameter sequence by using a part of the first key as an encryption key, to obtain the encrypted first waveform parameter sequence.

In this encryption implementation, the first communication apparatus further indicates, to the second communication apparatus, a start bit of the encryption key that is of the first waveform parameter sequence and that is in the first key.

Optionally, the first communication apparatus further encrypts the second waveform parameter, to obtain an encrypted second waveform parameter. For a specific encryption process, refer to the foregoing process in which the first communication apparatus encrypts the first waveform parameter. Details are not described herein again.

For example, the first communication apparatus encrypts a first sequence by using the first key, to obtain an encrypted first sequence. The first sequence indicates the start bit of the encryption key that is of the first waveform parameter sequence and that is in the first key. The first communication apparatus sends the encrypted first sequence to the second communication apparatus.

Therefore, the first communication apparatus can securely indicate, to the second communication apparatus, the start bit of the key that is used to encrypt the first waveform parameter sequence and that is in the first key.

The first communication apparatus may alternatively encrypt the first sequence by using another key, to obtain an encrypted first sequence. Therefore, the key used for the first sequence is not specifically limited in this application. In addition, that the first sequence indicates the start bit of the encryption key that is of the first waveform parameter sequence and that is in the first key is not limited in this application. The start bit may alternatively be indicated in another manner. For example, the first communication apparatus sends a first message to the second communication apparatus. The first message indicates the start bit of the encryption key that is of the first waveform parameter sequence and that is in the first key.

In a second encryption implementation, the first communication apparatus performs quantization on the first waveform parameter, to obtain a first waveform parameter sequence. The first communication apparatus performs cycling on the first waveform parameter sequence, to obtain a third waveform parameter sequence. The first communication apparatus encrypts the third waveform parameter sequence by using the first key, to obtain an encrypted third waveform parameter sequence.

Optionally, a length of the first waveform parameter sequence is 14 bits.

In an implementation, the waveform information further includes the second waveform parameter, and the second waveform parameter is non-public.

Optionally, a second waveform parameter sequence is obtained by performing quantization on the second waveform parameter. A length of the second waveform parameter sequence is 14 bits.

In an implementation, the first communication apparatus encrypts the second waveform parameter by using the first key, to obtain an encrypted second waveform parameter. For a specific encryption implementation, refer to the encryption implementation of the first waveform parameter. Details are not described herein again.

For a corresponding encryption process of another waveform parameter (including the second waveform parameter) in the waveform information in this application, refer to that of the foregoing first waveform parameter. Details are not described in this embodiment.

S402B: The first communication apparatus sends the encrypted first waveform parameter to the second communication apparatus.

Specifically, the first communication apparatus sends the encrypted first waveform parameter sequence to the second communication apparatus. Correspondingly, the second communication apparatus receives the encrypted first waveform parameter sequence.

Optionally, the first communication apparatus sends an encrypted second waveform parameter sequence to the second communication apparatus. Correspondingly, the second communication apparatus receives the encrypted second waveform parameter sequence.

S403B: The second communication apparatus decrypts the encrypted waveform parameter by using the first key, to obtain the waveform parameter.

Correspondingly, when the second communication apparatus performs step S403, the following two decryption implementations may also be included.

In a first decryption implementation, the second communication apparatus decrypts the encrypted first waveform parameter sequence by using the first key, to obtain the first waveform parameter sequence. Then, the second communication apparatus converts the first waveform parameter sequence to obtain the first waveform parameter.

Optionally, in the decryption implementation, the second communication apparatus receives first indication information from the first communication apparatus. The first indication information indicates a start bit of a decryption key that is of the encrypted first waveform parameter sequence and that is in the first key.

For example, the second communication apparatus receives the encrypted first sequence from the first communication apparatus. The encrypted first sequence may be obtained by encrypting the first sequence by using the first key. Similarly, the second communication apparatus may decrypt the encrypted first sequence by using the first key, to obtain the first sequence. The first sequence indicates the start bit of the key that is used to encrypt the first waveform parameter sequence and that is in the first key, or the first sequence indicates the start bit that is of the decryption key of the encrypted first waveform parameter sequence and that is in the first key.

Therefore, that the second communication apparatus decrypts the encrypted first waveform parameter sequence by using the first key, to obtain the first waveform parameter sequence may specifically include: The second communication apparatus decrypts, based on the first indication information, the encrypted first waveform parameter sequence by selecting a part of the first key as the decryption key, to obtain the first waveform parameter sequence.

In the foregoing decryption implementation, the second communication apparatus can accurately select the corresponding decryption key from the first key to decrypt the encrypted first waveform parameter sequence, to finally securely obtain the first waveform parameter.

In a possible implementation, the first communication apparatus and the second communication apparatus may further determine, in a manner agreed upon by the first communication apparatus and the second communication apparatus (or set in advance), a specific part of the first key to be used as the encryption key or the decryption key. In other words, the first communication apparatus selects the encryption key from the first key according to the mutual agreement, to encrypt the first waveform parameter sequence. Correspondingly, the second communication apparatus may also select the accurate decryption key from the first key according to the mutual agreement, to decrypt the encrypted first waveform parameter sequence.

Optionally, the second communication apparatus further decrypts the encrypted second waveform parameter sequence by using the first key, to obtain the second waveform parameter sequence. The second communication apparatus converts the second waveform parameter sequence to obtain the second waveform parameter. For details, refer to the foregoing manner of decrypting the encrypted first waveform parameter. Details are not described herein again.

In a second decryption implementation, the second communication apparatus receives the encrypted third waveform parameter sequence from the first communication apparatus. The third waveform parameter sequence is obtained based on the cycling of the first waveform parameter sequence. The second communication apparatus decrypts the encrypted third waveform parameter sequence by using the first key, to obtain the third waveform parameter sequence. The second communication apparatus determines the first waveform parameter sequence from the third waveform parameter sequence, and converts the first waveform parameter sequence to obtain the first waveform parameter.

In this embodiment of this application, for an implementation in which the second communication apparatus decrypts the encrypted waveform parameter in the waveform information, refer to the foregoing implementation in which the second communication apparatus decrypts the encrypted first waveform parameter. Details are not described again in this embodiment of this application.

In conclusion, the foregoing steps S401B to S403B are performed, so that the first communication apparatus can securely transmit the waveform information including the non-public waveform parameter to the second communication apparatus, and the second communication apparatus can effectively and accurately obtain the waveform parameter in the waveform information. Further, the first communication apparatus may modulate the first signal based on the non-public waveform parameter, to obtain the second signal, and sends the second signal to the second communication apparatus, so that the security of the signal transmission can be improved, and it is difficult for the unlicensed device to learn of the signal.

The following describes in detail, by using the following two specific embodiments, how to encrypt the waveform parameter by using the first key in the foregoing steps S401B to S403B, to ensure transmission security of the waveform parameter.

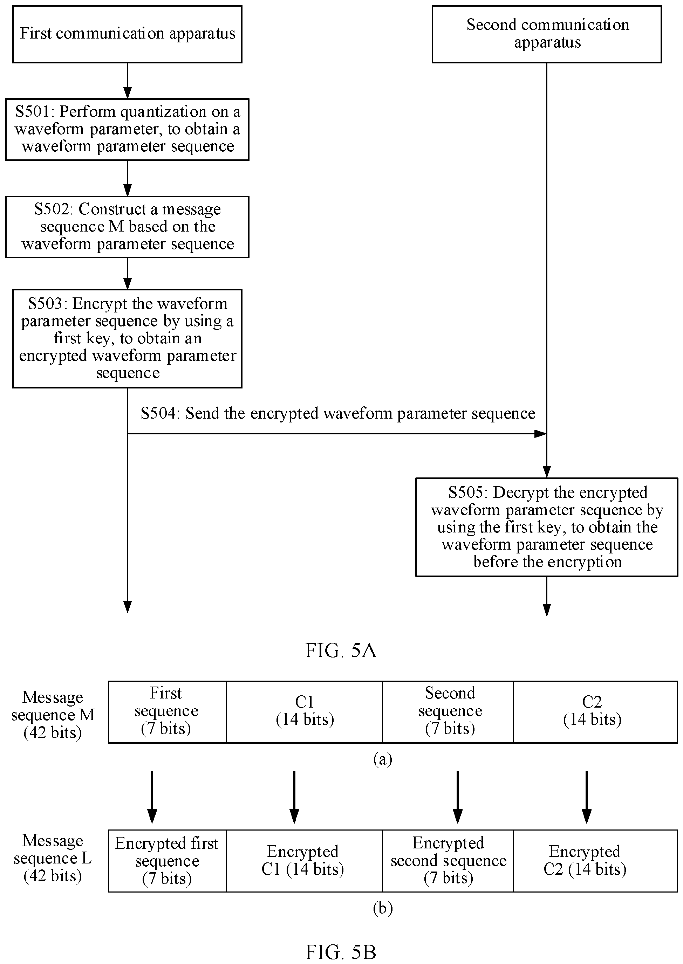

Based on the foregoing first encryption implementation, FIG. 5A shows a method procedure of a specific embodiment. The specific procedure of the example is as follows.

S501: A first communication apparatus performs quantization on a waveform parameter, to obtain a waveform parameter sequence.

Specifically, quantization is performed on a first waveform parameter $c1$ to obtain a first waveform parameter sequence $C1$, and parameter quantization is performed on a second waveform parameter $c2$ to obtain a second waveform parameter sequence $C2$.

In a possible implementation, lengths of $C1$ and $C2$ are both 14 bits.

S502: The first communication apparatus constructs a message sequence M based on the waveform parameter sequence.

Step S502 is an optional step.

For example, when the first communication apparatus performs step S502, the following may be included.

A first sequence (namely, a start bit of 7 bits) is added before $C1$, and a second sequence (namely, a start bit of 7 bits) is added before $C2$. The first sequence indicates a start bit of a key that is used to encrypt $C1$ and that is in a first key, and the second sequence indicates a start bit of a key that is used to encrypt $C2$ and that is in the first key.

Refer to (a) in FIG. 5B. The message sequence M may be constructed by using "first sequence (7 bits) + C1 (14 bits) + second sequence (7 bits) + C2 (14 bits)".

An actual process of constructing the message sequence M may not be limited to a construction manner in (a) in FIG. 5B, and "second sequence (7 bits) + C2 (14 bits) + first sequence (7 bits) + C1 (14 bits)" may alternatively be used. Alternatively, message sequences M1 and M2 are respectively constructed. M1 is "first sequence (7 bits) + C1 (14 bits)", and M2 is "second sequence (7 bits) + C2 (14 bits)". This is not specifically limited in this application.

S503: The first communication apparatus encrypts the waveform parameter sequence by using the first key, to obtain an encrypted waveform parameter sequence.

Specifically, the first communication apparatus separately encrypts $C1$ and $C2$ by using the first key, to obtain encrypted $C1$ and encrypted $C2$.

Optionally, the first key may be Secure-LTF-Key-Seed or another key derived by using a higher layer transient key HLTK.

Optionally, the first communication apparatus may further encrypt the first sequence by using the first key, and encrypt the second sequence by using the first key, to obtain an encrypted first sequence and an encrypted second sequence.

For example, when the first communication apparatus performs step S503, the following may be included.

First, the first communication apparatus determines whether a key length of the first key is greater than 256 bits. If the key length is greater than or equal to 256 bits, first 256 bits are selected from the key as the first key. If the key length is less than 256 bits, the key is cyclically repeated until the key length is 256 bits, and a 256-bit key obtained through the cyclic repetition serves as the first key.

Second, the first communication apparatus uses a key corresponding to a part including bits 0 to 127 in the first key (whose length is 256 bits) as $K1$, and uses a key corresponding to a part including bits 128 to 255 in the first key as K2.

Then, the first communication apparatus selects, based on the start bit indicated by the first sequence, one 14-bit key from K1 to encrypt C1, to obtain encrypted C1. The first communication apparatus selects, based on the start bit indicated by the second sequence, one 14-bit key from K2 to encrypt C2, to obtain encrypted C2.

In a possible implementation, the foregoing encryption processing may be exclusive OR processing. For example, bitwise exclusive OR processing may be performed.

Further, a 7-bit sequence, for example, a sequence including bits 0 to 6, is selected from K1, and the first sequence are encrypted with the sequence including bits 0 to 6, to obtain an encrypted first sequence. A 7-bit sequence, for example, a sequence including bits 128 to 134, is selected from K2, and the second sequence are encrypted with the sequence including bits 128 to 134, to obtain an encrypted second sequence.

For example, if the first sequence is 0100010, bits 34 to 47 of K1 are selected to perform an exclusive OR operation with C1. A case is similar for the second sequence. Therefore, a length of an obtained encrypted message sequence L is 42 bits. Optionally, when the first sequence or the second sequence is in a range from 1111011 to 1111111, the first sequence or the second sequence is an invalid sequence.

In a possible implementation, the first communication apparatus may further encrypt the message sequence M by using the first key, to obtain the encrypted message sequence L. Refer to (b) in FIG. 5B. For details, refer to the foregoing encryption process. Details are not described herein again.

Optionally, the first communication apparatus may separately encrypt the first waveform parameter sequence and the second waveform parameter sequence by using the first key. Optionally, the first communication apparatus may separately encrypt the first sequence and the second sequence by using the first key, to ensure that C1 and C2 are securely transmitted to a second communication apparatus.

In this embodiment, a length of the first key may not be limited to 256 bits, lengths of the first sequence and the second sequence are not limited to 14 bits, and the first waveform parameter sequence C1 and the second waveform parameter sequence C2 are not limited to 14 bits. Lengths of the three may need to meet the following relationships.

It is assumed that a length of the first waveform parameter sequence C1 is $x$ bits, a length of the second waveform parameter sequence C2 is $y$ bits, and both x and y are positive integers greater than 0. In this case, the length of the first sequence is $x/2$ bits, the length of the second sequence is $y/2$ bits, a length of K1 in the first key is $2^{x/2}$, and a length of K2 in the first key is $2^{y/2}$ bits. In other words, the length of the first key is $(2^{x/2} + 2^{y/2})$. "*" represents a multiplication sign, and "/" represents a division sign. A value of x may be equal to a value of y, or may not be equal to a value of y. This is not specifically limited in this application.

S504: The first communication apparatus sends the encrypted waveform parameter sequence to the second communication apparatus.

Correspondingly, the second communication apparatus receives the encrypted waveform parameter sequence.

Specifically, the first communication apparatus sends encrypted C1 and encrypted C2 to the second communication apparatus. Optionally, the first communication apparatus further sends the encrypted first sequence and the encrypted second sequence to the second communication apparatus. Correspondingly, the second communication apparatus receives the encrypted first sequence and the encrypted second sequence.

In a possible implementation, the first communication apparatus sends the message sequence L shown in FIG. 5B to the second communication apparatus.

S505: The second communication apparatus decrypts the encrypted waveform parameter sequence by using the first key, to obtain the waveform parameter sequence before the encryption.

Specifically, encrypted C1 is decrypted to obtain C1, and encrypted C2 is decrypted to obtain C2.

For example, when the second communication apparatus performs step S505, the following may be included.

First, the second communication apparatus may determine the first key whose length is 256 bits with reference to the manner in which the first communication apparatus determines the first key in step S503.

The second communication apparatus uses a key corresponding to a part including bits 0 to 127 in the first key as K1, and uses a key corresponding to a part including bits 128 to 255 in the first key as K2.

Then, the second communication apparatus selects a 7-bit sequence, to be specific, a sequence including bits 0 to 6, from K1, and performs decryption processing (for example, exclusive OR processing) on the encrypted first sequence with the sequence including bits 0 to 6, to obtain the first sequence. A 7-bit sequence, to be specific, a sequence including bits 128 to 134, is selected from K2, and the encrypted second sequence is decrypted (for example, exclusive OR processing) with the sequence including bits 128 to 134 bits, to obtain the second sequence.

Further, the second communication apparatus selects, based on the start bit indicated by the first sequence, one 14-bit key from K1 to decrypt the encrypted first waveform parameter sequence C1, to obtain the first waveform parameter sequence C1. The second communication apparatus selects, based on the start bit indicated by the second sequence, one 14-bit key from K2 to decrypt the encrypted second waveform parameter sequence C2, to obtain the second waveform parameter sequence C2.

Finally, the second communication apparatus performs quantization on the first waveform parameter sequence C1 and the second waveform parameter sequence C2, to obtain the first waveform parameter c1 and the second waveform parameter c2.

According to this embodiment, the first communication apparatus can securely transmit waveform information including a non-public waveform parameter to the second communication apparatus, and the second communication apparatus can effectively and accurately obtain the waveform parameter in the waveform information.

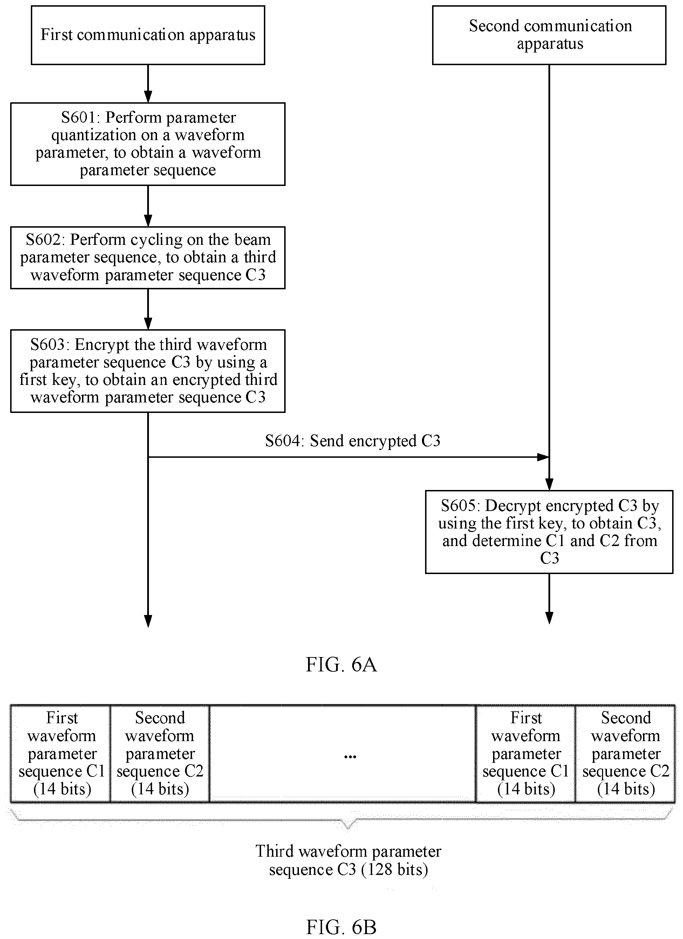

Based on the foregoing second encryption implementation, FIG. 6A shows a specific method procedure. The specific procedure of the example is as follows.

S601: A first communication apparatus performs parameter quantization on a waveform parameter to obtain a waveform parameter sequence.

Specifically, the first communication apparatus performs parameter quantization on a first waveform parameter c1 to obtain a first waveform parameter sequence C1, and performs parameter quantization on a second waveform parameter c2 to obtain a second waveform parameter sequence C2. Optionally, lengths of both C1 and C2 are 14 bits.

Step S601 is the same as step S501, and reference may be made to each other.

S602: The first communication apparatus performs cycling on the beam parameter sequence, to obtain a third waveform parameter sequence.

Specifically, the first communication apparatus performs cycling based on C1 and C2, to obtain the third beam parameter sequence C3.

Optionally, a length of the third waveform parameter sequence C3 is 128 bits.

FIG. 6B is a diagram of a structure of a third waveform parameter sequence C3. To be specific, C1 and C2 are sequentially sorted, and are cyclically repeated until a length of an obtained third waveform parameter sequence is 128 bits.

S603: Specifically, the first communication apparatus encrypts the third waveform parameter sequence C3 by using a first key, to obtain an encrypted third waveform parameter sequence C3.

Optionally, for the first key, refer to a type of the first key in step S503, and a length of the first key is 128 bits. A specific encryption manner may also be exclusive OR processing.

S604: The first communication apparatus sends the encrypted third waveform parameter sequence C3 to the second communication apparatus.

Correspondingly, the second communication apparatus receives the encrypted third waveform parameter sequence C3.

S605: The second communication apparatus decrypts the encrypted third waveform parameter sequence C3 by using the first key, to obtain the third waveform parameter sequence C3, and determines the first waveform parameter sequence C1 and the first waveform parameter sequence C2 from the third waveform parameter sequence C3.

Correspondingly, the second communication apparatus decrypts the encrypted third waveform parameter sequence C3 by using the first key whose length is 128 bits, to obtain the third waveform parameter sequence C3 (whose length is 128 bits).

For example, the third waveform parameter sequence C3 has the structure shown in FIG. 6B. In this case, sequences including first 28 bits are selected from the third waveform parameter sequence C3 whose length is 128 bits, to serve as the first waveform parameter sequence C1 and the first waveform parameter sequence C2. Further, a sequence including first 14 bits in the 28 bits is determined as the first waveform parameter sequence C1, and a sequence including last 14 bits in the 28 bits is determined as the second waveform parameter sequence C2.

Further, the second communication apparatus separately converts the first waveform parameter sequence C1 and the first waveform parameter sequence C2, to obtain the first waveform parameter c1 and the first waveform parameter c2.

According to the foregoing two specific encryption embodiments, the first communication apparatus can securely transmit waveform parameters (for example, the first waveform parameter c1 and the second waveform parameter c2) in the waveform information to a second device, so that the second communication apparatus can effectively and accurately obtain the waveform parameter.

The following analyzes performance of the foregoing encryption method.

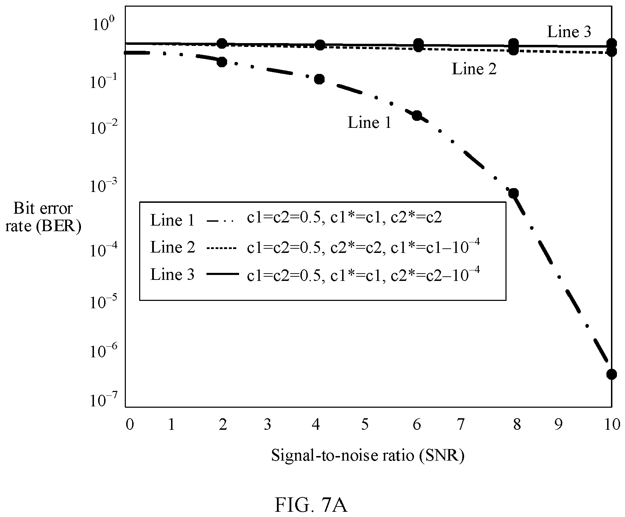

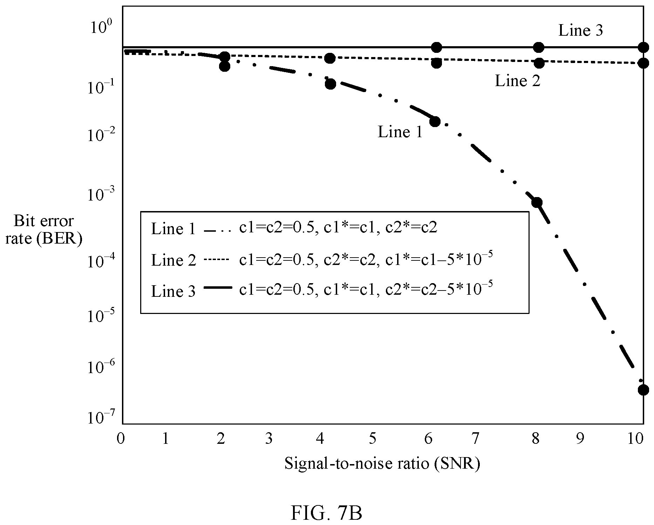

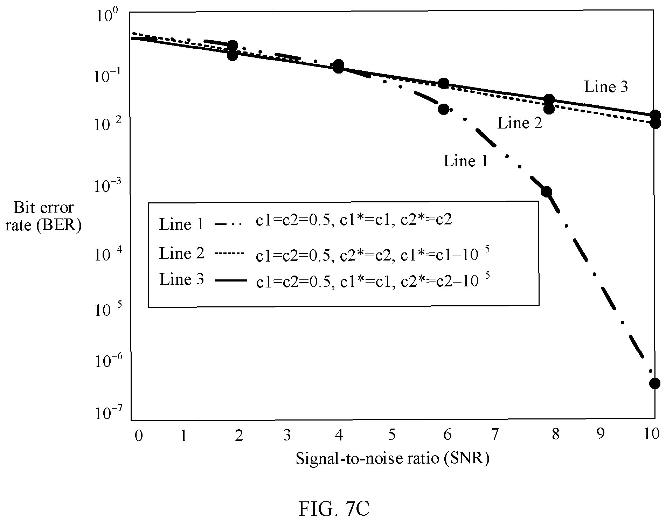

Refer to FIG. 7A, FIG. 7B, and FIG. 7C. c1 and c2 (real waveform parameters) are compared with c1* and c2* (waveform parameters used by an attacker). It can be seen that when c1* and c2* used by the attacker are equal to the corresponding real waveform parameters c1 and c2, in other words, the attacker has the real waveform parameters, demodulation can be performed.

Refer to FIG. 7A. When a deviation between c1* and c2* used by the attacker and the real waveform parameters c1 and c2 is $10^{-4}$, in other words, an error between c1* and c2* used by the attacker and the real waveform parameters c1 and c2 is large, it can be seen that a deviation between each of a line 2 and a line 3 and a line 1 is large. In this case, the attacker cannot perform demodulation. Refer to FIG. 7B. When a deviation between c1* and c2* used by the attacker and the corresponding real waveform parameters c1 and c2 is $5\times10^{-5}$, in other words, an error between c1* and c2* used by the attacker and the real waveform parameters c1 and c2 decreases, it can be seen that a deviation between each of a line 2 and a line 3 and a line 1 is still large. In this case, the attacker still cannot perform demodulation. Refer to FIG. 7C. When a deviation between c1* and c2* used by the attacker and c1 and c2 used by a granter is $10^{-5}$, in other words, an error between c1* and c2* used by the attacker and the real waveform parameters c1 and c2 decreases, it can be seen that both a line 2 and a line 3 are substantially close to a line 1. In this case, the attacker may successfully perform demodulation.

Therefore, when the deviation between c1* and c2* used by the attacker and the real waveform parameters c1 and c2 is greater than or equal to $5 \times 10^{-5}$ (equivalent to a threshold), a deviation between a bit error rate of the attacker and a bit error rate in a case of having the real waveform parameters is large. In this case, the attacker cannot perform demodulation. Therefore, accuracy of c1 and accuracy of c2 are set to $5 \times 10^{-5}$. Therefore, the following may be obtained:

a key space size of c1 is $N_1 = \frac{(0.5+0.5)}{5 \times 10^{-5}} = 2 \times 10^4 \approx 2^{14}$,

a key space size of c2 is $N_2 = \frac{(0.5+0.5)}{5 \times 10^{-5}} = 2 \times 10^4 \approx 2^{14}$, and

a key space size of a waveform parameter is $N = N_1 \times N_2 = 2^{14} \times 2^{14} = 2^{28}$.

When the waveform parameter is not considered, complexity of cracking a parameterized waveform according to a Viterbi decoding algorithm is equivalent to that of OFDM according to the Viterbi decoding algorithm. However, $2^{28}$ needs to be multiplied on this basis to crack the parameterized waveform. This has high cracking difficulty.

Therefore, a larger error between c1* and c2* used by the attacker and the real waveform parameters c1 and c2 indicates higher cracking difficulty. It can be learned from the foregoing formulas of the key space size of c1 and the key space size of c2 that a larger error between c1* and c2* used by the attacker and the real waveform parameters c1 and c2 indicates a better case. In this case, values of corresponding N1 and N2 are smaller. It can be learned that when both a first waveform parameter sequence C1 and a second waveform parameter sequence C2 are less than or equal to 14 bits (bit), security of a modulated signal may be high. However, when bit sizes of the first waveform parameter sequence C1 and the second waveform parameter sequence C2 are small, the key space sizes of c1 and c2 are also small. When lengths of the first waveform parameter sequence C1 and the second waveform parameter sequence C2 are equal to 14 bits (bit), it can be ensured that the attacker cannot perform demodulation while the key space sizes of c1 and c2 are ensured.

According to the foregoing descriptions, key space of the waveform parameter sequence may be properly used. Therefore, cracking by the attacker is more difficult and communication security in a ranging process is protected.

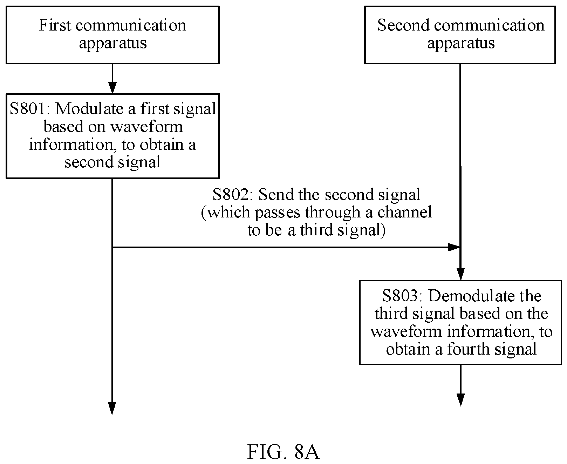

Based on the foregoing steps S401A to S403A in which the first communication apparatus and the second communication apparatus respectively modulate and demodulate signals based on the waveform information, FIG. 8A shows a method procedure of a specific embodiment. A specific procedure of the example is as follows.

S801: A first communication apparatus modulates a first signal based on waveform information, to obtain a second signal.

The waveform information includes a first waveform parameter c1 and a second waveform parameter c2. At least one of the first waveform parameter c 1 and the second waveform parameter c2 is non-public.

For example, when the first communication apparatus performs step S801, the following may be included.

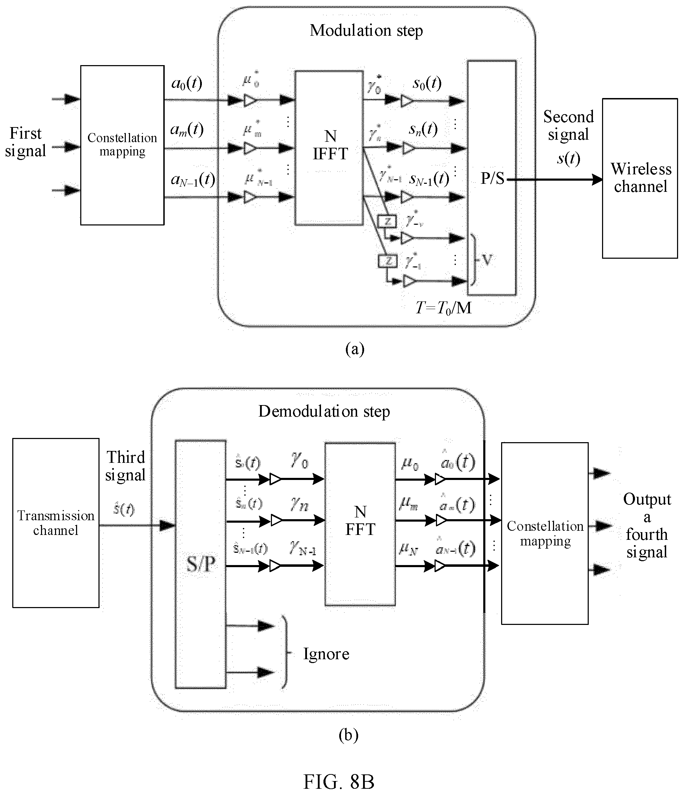

Refer to (a) in FIG. 8B. The first signal is represented as $x = [x_0, x_1, ..., x_{L-1}]$, where L is a length of the first signal. First, the first communication apparatus performs constellation mapping on the first signal, to obtain a first signal $a = [a_0(t), a_1(t), ..., a_{N-1}(t)]$ obtained through the constellation mapping, where N is a length of the first signal obtained through the constellation mapping. Then, the first signal obtained through the constellation mapping is multiplied by a sequence $\mu^*$, that is, $\mu^* = [\mu_0^*, \mu_1^*, \cdots \mu_{N-1}^*]$, to obtain a first signal obtained by multiplying $\mu^*$. Further, after inverse fast fourier transform is performed on the first signal obtained by multiplying the sequence $\mu^*$, a first signal obtained by performing the inverse fast fourier transform is multiplied by a sequence $\gamma^*$, that is, $\gamma^* = [\gamma_0^*, \gamma_1^*, \cdots \gamma_{N-1}^*, \gamma_1^*]$. Finally, parallel to series (parallel to series, P/S) processing is performed to obtain the second signal s. The second signal s meets the following Formula 1:

$$s = \Phi_{M \times N} a \qquad\qquad \text{Formula 1}$$

Optionally, a modulation matrix $\Phi_{M \times N}$ meets the following Formula 2:

$$\Phi_{M \times N}(c1, c2) = e^{j2\pi(c1m^2 + c2n^2 + nm/N)} / \sqrt{N} \qquad\qquad \text{Formula 2}$$

$\Phi_{M\times N}(c1, c2)$ represents the modulation matrix, $M \times N$ represents a size of the modulation matrix, both M and N are positive integers, $M$ is a quantity of rows of the modulation matrix, $N$ is a quantity of columns of the modulation matrix, $m$ is a row index of the modulation matrix, $n$ is a column index of the modulation matrix, c1 is the first waveform parameter, c2 is the second waveform parameter, and $j$ is a unit of an imaginary part.

Specifically, $M = N + v$, $\gamma_n = e^{j2\pi c1 n2}$, and $\mu_m = e^{j2\pi c2 m2}$. $v$ is a difference between M and N. Generally, $v$ value may be proportional to N, for example, $v = N/4$ or $v = N18$.

S802: The first communication apparatus sends the second signal to a second communication apparatus.

Correspondingly, the second communication apparatus receives a third signal. The third signal is a signal obtained after the second signal passes through a transmission channel. The second signal is obtained by modulating the first signal based on the waveform information. The waveform information includes the first waveform parameter and the second waveform parameter. At least one of the first waveform parameter and the second waveform parameter is non-public.

S803: The second communication apparatus demodulates the third signal based on the waveform information, to obtain a fourth signal.

For example, refer to (b) in FIG. 8B. The third signal received by the second communication apparatus through a wireless channel is $\hat{s}$, that is, $\hat{s} = [\hat{s}_0(t), \hat{s}_1(t),...,\hat{s}_{N-1}(t)]$. If the wireless channel is a white Gaussian noise, $\hat{s} = s + n$, where s is the second signal. First, the second communication apparatus performs series to parallel (series to parallel, S/P) processing on the third signal $\hat{s}$. Then, the second communication apparatus multiplies the third signal $\hat{s}$ by a sequence $\mu$, that is, $\mu = [\mu_0, \mu_1, ..., \mu_{N-1}]$, to obtain a third signal obtained by multiplying the sequence $\mu$. Further, after fast fourier transform is performed on the third signal obtained by multiplying the sequence $\mu$, a third signal obtained by performing the fast fourier transform is multiplied by a sequence $\gamma$, that is, $\gamma = [\gamma_0, y_1,..., \gamma_{N-1}]$, to obtain a demodulated third signal $\hat{a}$. Finally, the second communication apparatus performs constellation mapping on the demodulated third signal $\hat{a}$, that is, to obtain the fourth signal.

In a possible implementation, refer to (a) in FIG. 8B. The first communication apparatus sends a second signal whose sequence length is N and a sequence V whose length is $v$ (a sum of a value of the length N of the second signal and a value of the length $v$ of the sequence V is equal to M). Apparently, in (b) in FIG. 8B, a signal received by the second communication apparatus is also a sequence whose length is M. In a demodulation process of this application, only first sequences whose lengths are N need to be selected as sequences of the third signal, and other sequences may be ignored.

Optionally, before performing constellation mapping on the demodulated third signal $\hat{a}$, the second communication apparatus further performs equalization processing on the demodulated third signal $\hat{a}$ by using a channel equalization matrix.

The channel equalization matrix H meets the following Formula 3:

$$\text{H} = \Phi^H_{M\times N}(c1, c2)\Phi_{M\times N}(c1, c2) \qquad\qquad \text{Formula 3}$$

A sequence obtained by performing channel equalization is $\hat{a} = H^{-1}\hat{a}$. Therefore, the fourth signal is $\hat{x} = [\hat{x}_0, \hat{x}_1,..., \hat{x}_{L-1}]$.

After performing step S803, the second communication apparatus may obtain the fourth signal. Further, the second communication apparatus may perform communication sensing based on the fourth signal $\hat{x}$ and the first signal $x$. For example, in ranging, the second communication apparatus may calculate a phase error between the fourth signal $\hat{x}$ and the first signal $x$, obtain a delay through calculation based on the phase error, and finally determine a distance based on the delay. A specific calculation process is not described in detail in this application.

According to this embodiment, the second communication apparatus can securely obtain a waveform parameter used to demodulate the third signal. Further, a signal from the first communication apparatus is demodulated based on the waveform parameter, to avoid a case in which another unlicensed device obtains the waveform parameter to obtain the signal from the first communication apparatus. Therefore, according to the method, security of signal transmission can be improved, so that security of communication sensing performed by using the signal can be improved.

The following describes a communication apparatus provided in embodiments of this application.

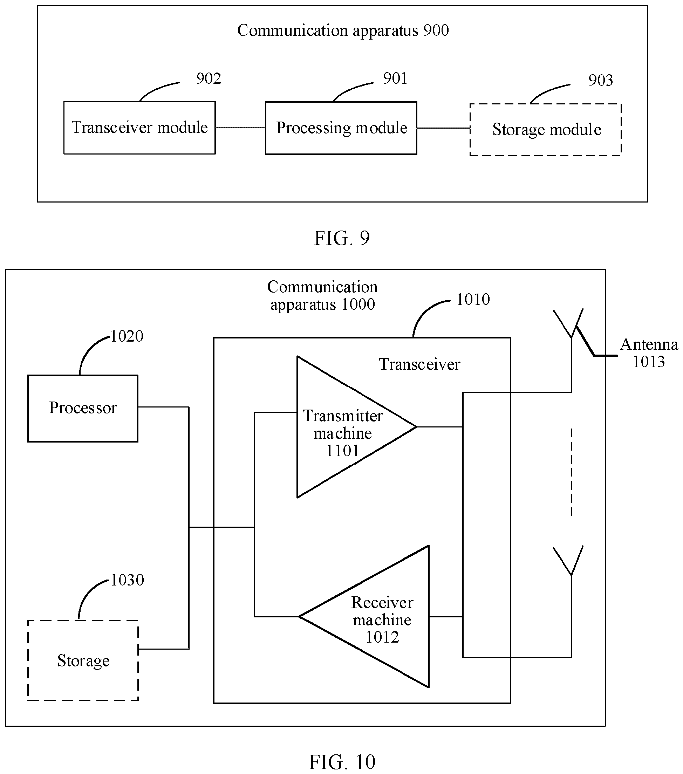

Based on a same technical concept, embodiments of this application provide a communication apparatus. The apparatus may be used in a first communication apparatus in the method of this application. In other words, the apparatus includes a one-to-one corresponding module or unit for performing the method/operation/step/action described by the first communication apparatus in the foregoing embodiments. The module or unit may be implemented by a hardware circuit, software, or a combination of a hardware circuit and software. The communication apparatus has a structure shown in FIG. 9.

As shown in FIG. 9, a communication apparatus 900 may include a processing module 901. The processing module 901 is equivalent to a processing unit, and may be configured to perform a process of adjusting a first signal based on waveform information.

Optionally, the communication apparatus 900 further includes a transceiver module 902. The transceiver module 902 may implement a corresponding communication function. Specifically, the transceiver module 902 may specifically include a receiving module and/or a sending module. The receiving module may be configured to receive information and/or data, and/or the like, and the sending module may be configured to send information and/or data. A transceiver unit may also be referred to as a communication interface or a transceiver unit.

Optionally, the communication apparatus 900 may further include a storage module 903. The storage module 903 is equivalent to a storage unit, and may be configured to store instructions and/or data. The processing module 901 may read the instructions and/or the data in the storage module, so that the communication apparatus implements the foregoing method embodiments.

The communication apparatus module 900 may be configured to perform an action performed by the first communication apparatus in the foregoing method embodiments. The communication apparatus 900 may be the first communication apparatus or a part that can be configured for the first communication apparatus. The transceiver module 902 is configured to perform a sending-related operation on a first communication apparatus side in the foregoing method embodiments. The processing module 901 is configured to perform a processing-related operation on the first communication apparatus side in the foregoing method embodiments.

Optionally, the transceiver module 902 may include the sending module and the receiving module. The sending module is configured to perform a sending operation in the foregoing method embodiments. The receiving module is configured to perform a receiving operation in the foregoing method embodiments.

It should be noted that the communication apparatus 900 may include the sending module, but does not include the receiving module. Alternatively, the communication apparatus 900 may include the receiving module, but does not include the sending module. Specifically, it may be determined whether the foregoing solutions performed by the communication apparatus 900 include a sending action and a receiving action.

In an example, the communication apparatus 900 is configured to perform an action performed by the first communication apparatus in the embodiment shown in FIG. 4A or FIG. 4B.

For example, the processing module 901 is configured to modulate a first signal based on waveform information, to obtain a second signal. The transceiver module 902 is configured to send the second signal to a second communication apparatus.

It should be understood that a specific process of performing the foregoing corresponding process by each module is described in detail in the foregoing method embodiments. For brevity, details are not described herein again.

The processing module 901 in the foregoing embodiments may be implemented by at least one processor or processor-related circuit. The transceiver module 902 may be implemented by a transceiver or a transceiver-related circuit. The storage unit may be implemented by using at least one storage.

Based on a same technical concept, embodiments of this application provide a communication apparatus. The apparatus may be used in a second communication apparatus in the method of this application. In other words, the apparatus includes a one-to-one corresponding module or unit for performing the method/operation/step/action described by the second communication apparatus in the foregoing embodiments. The module or unit may be implemented by a hardware circuit, software, or a combination of a hardware circuit and software. The communication apparatus may also have a structure shown in FIG. 9.

As shown in FIG. 9, a communication apparatus 900 may include a processing module 901. The processing module 901 is equivalent to a processing unit, and may be used for processing processes of decrypting an encrypted waveform parameter and demodulating a third signal.

Optionally, the communication apparatus 900 further includes a transceiver module 902. The transceiver module 902 may implement a corresponding communication function. Specifically, the transceiver module 902 may specifically include a receiving module and/or a sending module. The receiving module may be configured to receive information and/or data, and/or the like, and the sending module may be configured to send information and/or data. A transceiver unit may also be referred to as a communication interface or a transceiver unit.

Optionally, the communication apparatus 900 may further include a storage module 903. The storage module 903 is equivalent to a storage unit, and may be configured to store instructions and/or data. The processing module 901 may read the instructions and/or the data in the storage module, so that the communication apparatus implements the foregoing method embodiments.

The communication apparatus module 900 may be configured to perform an action performed by the second communication apparatus in the foregoing method embodiments. The communication apparatus 900 may be the second communication apparatus or a part that can be configured for the second communication apparatus. The transceiver module 902 is configured to perform a receiving-related operation on a second communication apparatus side in the foregoing method embodiments. The processing module 901 is configured to perform a processing-related operation on the second communication apparatus side in the foregoing method embodiments.

Optionally, the transceiver module 902 may include the sending module and the receiving module. The sending module is configured to perform a sending operation in the foregoing method embodiments. The receiving module is configured to perform a receiving operation in the foregoing method embodiments.

It should be noted that the communication apparatus 900 may include the sending module, but does not include the receiving module. Alternatively, the communication apparatus 900 may include the receiving module, but does not include the sending module. Specifically, it may be determined whether the foregoing solutions performed by the communication apparatus 900 include a sending action and a receiving action.

In an example, the communication apparatus 900 is configured to perform an action performed by the second communication apparatus in the embodiment shown in FIG. 4A or FIG. 4B.

For example, the transceiver module 902 is configured to receive a third signal from a first communication apparatus. The third signal is a signal obtained after a second signal passes through a transmission channel. The second signal is obtained by modulating a first signal based on waveform information. The processing module 901 is configured to demodulate the third signal based on the waveform information, to obtain a fourth signal.

It should be understood that a specific process of performing the foregoing corresponding process by each module is described in detail in the foregoing method embodiments. For brevity, details are not described herein again.

The processing module 901 in the foregoing embodiments may be implemented by at least one processor or processor-related circuit. The transceiver module 902 may be implemented by a transceiver or a transceiver-related circuit. The storage unit may be implemented by using at least one storage.

This application further provides a communication apparatus. The communication apparatus may be a first communication apparatus, a processor of the first communication apparatus, or a chip. The communication apparatus may be configured to perform an operation performed by the first communication apparatus in the foregoing method embodiments. The communication apparatus may alternatively be a second communication apparatus, a processor of the second communication apparatus, or a chip. The communication apparatus may be configured to perform an operation performed by the second communication apparatus in the foregoing method embodiments.

FIG. 10 is a diagram of a simplified structure of a communication apparatus. When the communication apparatus 1000 is a first communication apparatus, the communication apparatus 1000 includes a processor 1020. Optionally, the communication apparatus 1000 further includes a transceiver 1010 and a storage 1030. The transceiver 1010 includes a transmitter machine 1011, a receiver machine 1012, a radio frequency circuit (which is not shown in the figure), an antenna 1013, and an input/output apparatus (which is not shown in the figure). The storage 1030 may store computer program code.

The processor 1020 is mainly configured to modulate a first signal based on waveform information, control the communication apparatus 1000, execute a software program, process data of the software program, and the like. The storage is mainly configured to store the software program and data. The radio frequency circuit is mainly configured to perform conversion between a baseband signal and a radio frequency signal, and process the radio frequency signal. The antenna 1013 is mainly configured to receive and send radio frequency signals in a form of an electromagnetic wave. The input/output apparatus, for example, a touchscreen, a display screen, a keyboard, or the like, is mainly configured to receive data input by a user and output data to the user. It should be noted that some types of communication apparatuses 1000 may have no input/output apparatus.

When data needs to be sent, after performing baseband processing on the to-be-sent data, the processor 1020 outputs a baseband signal to the radio frequency circuit. The radio frequency circuit performs radio frequency processing on the baseband signal and then sends a radio frequency signal to the outside in a form of an electromagnetic wave through the antenna. When data is sent to the communication apparatus 1000, the radio frequency circuit receives a radio frequency signal through the antenna, converts the radio frequency signal into a baseband signal, and outputs the baseband signal to the processor. The processor 1020 converts the baseband signal into data, and processes the data. For ease of description, FIG. 10 shows only one storage, one processor, and one transceiver. In an actual first communication apparatus product, there may be one or more processors and one or more storages. The storage may also be referred to as a storage medium, a storage device, or the like. The storage may be disposed independently of the processor, or may be integrated with the processor. This is not limited in this embodiment of this application.

In this embodiment of this application, the antenna and the radio frequency circuit that have a transceiver function may be considered as a transceiver unit (a transceiver module) of the communication apparatus 1000, and the processor that has a processing function may be considered as a processing unit (a processing module) of the communication apparatus 1000.

As shown in FIG. 10, the communication apparatus 1000 includes the transceiver 1010, the processor 1020, and the storage 1030. The transceiver 1010 may also be referred to as a transceiver unit, a transceiver machine, a transceiver apparatus, a communication interface, or the like. The processor 1020 may also be referred to as a processing unit, a processing board, a processing module, a processing apparatus, or the like.

Optionally, a component that is in the transceiver 1010 and that is configured to implement a receiving function may be considered as a receiving module, and a component that is in the transceiver 1010 and that is configured to implement a sending function may be considered as a sending unit or a sending module. In other words, the transceiver 1010 includes a transmitter machine 1011 and a receiver machine 1012. The transceiver 1010 may also be sometimes referred to as a transceiver machine, a transceiver module, a transceiver circuit, or the like. The transmitter machine 1011 may also be sometimes referred to as a transmitter, a transmitting module, a transmitting circuit, or the like. The receiver machine 1012 may also be sometimes referred to as a receiver, a receiving module, a receiving circuit, or the like.

For example, in an implementation, the processor 1020 is configured to perform a processing action on a first communication apparatus side in the embodiment shown in FIG. 4A or FIG. 4B, and the transceiver 1010 is configured to perform receiving and sending actions on the first communication apparatus side in FIG. 4A or FIG. 4B. For example, the transceiver 1010 is configured to perform S402A in the embodiment shown in FIG. 4A, and may be specifically configured to send the second signal to the second communication apparatus; or the transceiver 1010 is configured to perform an operation of S402B in the embodiment shown in FIG. 4B, and may be specifically configured to send the encrypted waveform parameter to the second communication apparatus. The processor 1020 is configured to perform a processing operation of S401A in the embodiment shown in FIG. 4A, and may be specifically modulate the first signal based on the waveform information, to obtain the second signal; or the processor 1020 is configured to perform a processing operation of S401B in the embodiment shown in FIG. 4B, and may be specifically configured to encrypt the waveform parameter by using the first key, to obtain the encrypted waveform parameter.

It should be understood that FIG. 10 is merely an example rather than a limitation, and the foregoing first communication apparatus including the transceiver module and the processing module may not depend on the structure shown in FIG. 10.

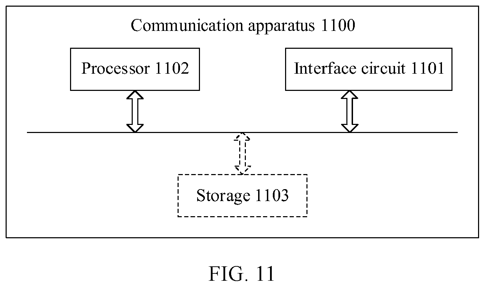

When the communication apparatus is a chip, FIG. 11 is a diagram of a simplified structure of a chip. The chip includes an interface circuit 1101 and a processor 1102. The interface circuit 1101 and the processor 1102 are coupled to each other. It may be understood that the interface circuit 1101 may be a transceiver or an input/output interface, and the processor may be a processing module, a microprocessor, or an integrated circuit integrated on the chip. A sending operation of the first communication apparatus in the foregoing method embodiments may be understood as an output of the chip, and a receiving operation of the first communication apparatus in the foregoing method embodiments may be understood as an input of the chip.

Optionally, the communication apparatus 1100 may further include a storage 1103, configured to store instructions executed by the processor 1102, store input data needed by the processor 1102 to run the instructions, or store data generated after the processor 1102 runs the instructions. Optionally, the storage 1103 may be further integrated with the processor 1102.

FIG. 10 is a diagram of a simplified structure of a communication apparatus. When the communication apparatus 1000 is a second communication apparatus, the communication apparatus 1000 includes a processor 1020. Optionally, the communication apparatus 1000 further includes a transceiver 1010 and a storage 1030. The processor 1020 is mainly configured to demodulate a third signal based on waveform information, control the communication apparatus 1000, and the like. The processor 1020 is usually a control center of a base station, and may be generally referred to as a processor (processing module), and is configured to control the communication apparatus 1000 to perform a processing operation on a second communication apparatus side in the foregoing method embodiments. The storage 1030 is mainly configured to store computer program code and data. The transceiver 1010 is mainly configured to receive and send radio frequency signals and perform conversion between a radio frequency signal and a baseband signal. The transceiver 1010 may be generally referred to as a transceiver module, a transceiver machine, a transceiver circuit, a transceiver, or the like. The transceiver module of the transceiver 1010 may also be referred to as a transceiver machine, a transceiver, or the like, and includes an antenna 1013 and a radio frequency circuit (which is not shown in the figure). The radio frequency circuit is mainly configured to perform radio frequency processing. Optionally, a component that is in the transceiver 1010 and that is configured to implement a receiving function may be considered as a receiver machine, and a component that is configured to implement a sending function may be considered as a transmitter machine. In other words, the transceiver 1010 includes a transmitter machine 1011 and a receiver machine 1012. The receiver machine may also be referred to as a receiving module, a receiver, a receiving circuit, or the like. The transmitter machine may be referred to as a transmitting module, a transmitter, a transmitting circuit, or the like.

The transceiver 1010 and the storage 1030 may include one or more boards, and each board may include one or more processors and one or more storages. The processor is configured to read and execute a program in the storage, to implement a baseband processing function and control the base station. If there are a plurality of boards, the boards may be interconnected with each other, to enhance a processing capability. In an optional implementation, the plurality of boards may share one or more processors, the plurality of boards may share one or more storages, or the plurality of boards may simultaneously share one or more processors.

For example, in an implementation, the transceiver module of the transceiver 1010 is configured to perform a transceiver-related process performed by the second communication apparatus in the embodiment shown in FIG. 4A or FIG. 4B. The processor of the processor 1020 is configured to perform a processing-related process performed by the second communication apparatus in the embodiment shown in FIG. 4A or FIG. 4B.

It should be understood that FIG. 10 is merely an example rather than a limitation, and the foregoing second communication apparatus including the processor, the storage, and the transceiver may not depend on the structure shown in FIG. 10.

When the communication apparatus is a chip, FIG. 11 is a diagram of a simplified structure of a chip. The chip includes an interface circuit 1101 and a processor 1102. The interface circuit 1101 and the processor 1102 are coupled to each other. It may be understood that the interface circuit 1101 may be a transceiver or an input/output interface, and the processor may be a processing module, a microprocessor, or an integrated circuit integrated on the chip. A sending operation of the second communication apparatus in the foregoing method embodiments may be understood as an output of the chip, and a receiving operation of the second communication apparatus in the foregoing method embodiments may be understood as an input of the chip.

Optionally, the communication apparatus 1100 may further include a storage 1103, configured to store instructions executed by the processor 1102, store input data needed by the processor 1102 to run the instructions, or store data generated after the processor 1102 runs the instructions. Optionally, the storage 1103 may be further integrated with the processor 1102.

An embodiment of this application further provides a computer-readable storage medium. The computer-readable storage medium stores computer instructions for implementing the method performed by the first communication apparatus or the second communication apparatus in the foregoing method embodiments.

For example, when a computer program is executed by a computer, the computer is enabled to implement the method performed by the first communication apparatus or the second communication apparatus in the foregoing method embodiments.

An embodiment of this application further provides a computer program product including instructions. When the instructions are executed by a computer, the computer is enabled to implement the method performed by the first communication apparatus or the second communication apparatus in the foregoing method embodiments.

An embodiment of this application further provides a communication system. The communication system includes the first communication apparatus and the second communication apparatus in the foregoing embodiments.

An embodiment of this application further provides a chip apparatus, including a processor. The processor is configured to invoke a computer program or computer instructions stored in a storage, so that the processor performs the communication method in the embodiment shown in FIG. 4A or FIG. 4B.

In a possible implementation, an input of the chip apparatus corresponds to a receiving operation in the embodiment shown in FIG. 4A or FIG. 4B, and an output of the chip apparatus corresponds to a sending operation in the embodiment shown in FIG. 4A or FIG. 4B.

Optionally, the processor is coupled to the storage through an interface.

Optionally, the chip apparatus further includes the storage, and the storage stores the computer program or the computer instructions.

The processor mentioned in any of the foregoing may be a general central processing unit, a microprocessor, an application-specific integrated circuit (application-specific integrated circuit, ASIC), or one or more integrated circuits configured to control program execution of the communication method in the embodiment shown in FIG. 4A or FIG. 4B. The storage mentioned in any one of the foregoing may be a read-only memory (read-only memory, ROM), another type of static storage device that can store static information and instructions, a random access memory (random access memory, RAM), or the like.

It should be noted that, for ease and brevity of description, for explanations and beneficial effects of related content of any communication apparatus provided above, refer to a corresponding method embodiment provided above. Details are not described herein again.

In this application, the first communication apparatus or the second communication apparatus may include a hardware layer, an operating system layer running above the hardware layer, and an application layer running above the operating system layer. The hardware layer may include hardware such as a central processing unit (central processing unit, CPU), a memory management unit (memory management unit, MMU), a memory (which is also referred to as a main memory), and the like. An operating system of the operating system layer may be any one or more types of computer operating systems that implement service processing by using a process (process), for example, a Linux operating system, a Unix operating system, an Android operating system, an iOS operating system, a windows operating system, or the like. The application layer may include applications such as a browser, an address book, word processing software, instant messaging software, and the like.

Division into the modules in embodiments of this application is an example, is merely division into logical functions, and may be other division in actual implementation. In addition, function modules in embodiments of this application may be integrated into one processor, or may exist alone physically, or two or more modules may be integrated into one module. The foregoing integrated module may be implemented in a form of hardware, or may be implemented in a form of a software function module.

With descriptions of the foregoing implementations, a person skilled in the art may clearly understand that embodiments of this application may be implemented by hardware, firmware or a combination thereof. When the functions are implemented through the software, the functions may be stored in a computer-readable medium or be transmitted as one or more instructions or code in the computer-readable medium. The computer-readable medium includes a computer storage medium and a communication medium. The communication medium includes any medium that enables a computer program to be transmitted from one place to another. The storage medium may be any usable medium that can be accessed by a computer. Examples of the computer-readable medium include but are not limited to: a RAM, a ROM, an electrically erasable programmable read-only memory (electrically erasable programmable read-only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by the computer. In addition, any connection may be properly defined as the computer-readable medium. For example, if software is transmitted from a website, a server or another remote source through a coaxial cable, an optical fiber cable, a twisted pair, a digital subscriber line (digital subscriber line, DSL) or wireless technologies such as infrared ray, radio and microwave, the coaxial cable, the optical fiber cable, the twisted pair, the DSL or the wireless technologies such as the infrared ray, the radio and the microwave are included in fixation of a medium to which the coaxial cable, the optical fiber cable, the twisted pair, the DSL or the wireless technologies such as the infrared ray, the radio and the microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk generally copies data by a magnetic means, and the disc copies data optically by a laser means. The foregoing combination should also be included in the protection scope of the computer-readable medium.

In conclusion, the foregoing descriptions are merely embodiments of this application, and are not intended to limit the protection scope of this application. Any modification, equivalent substitution, and improvement made based on the disclosure of this application shall fall within the protection scope of this application.

**Claims**

1.  A communication method, comprising:

    modulating, by a first communication apparatus, a first signal based on waveform information, to obtain a second signal, wherein the waveform information comprises a first waveform parameter, and the first waveform parameter is non-public; and
    sending, by the first communication apparatus, the second signal to a second communication apparatus.

2.  The method according to claim 1, wherein before the sending, by the first communication apparatus, the second signal to a second communication apparatus, the method further comprises: encrypting, by the first communication apparatus, the first waveform parameter by using a first key, to obtain an encrypted first waveform parameter; and sending, by the first communication apparatus, the encrypted first waveform parameter to the second communication apparatus.

3.  The method according to claim 2, wherein the encrypting, by the first communication apparatus, the first waveform parameter by using a first key, to obtain an encrypted first waveform parameter comprises:

    performing, by the first communication apparatus, quantization on the first waveform parameter, to obtain a first waveform parameter sequence; and
    encrypting, by the first communication apparatus, the first waveform parameter sequence by using a part of the first key as an encryption key, to obtain an encrypted first waveform parameter sequence.

4.  The method according to claim 3, wherein the method further comprises: indicating, by the first communication apparatus, a start bit of the encryption key in the first key to the second communication apparatus.

5.  The method according to claim 2, wherein the encrypting, by the first communication apparatus, the first waveform parameter by using a first key, to obtain an encrypted first waveform parameter comprises:

    performing, by the first communication apparatus, quantization on the first waveform parameter, to obtain a first waveform parameter sequence;
    performing cycling, by the first communication apparatus, on the first waveform parameter sequence, to obtain a third waveform parameter sequence; and
    encrypting, by the first communication apparatus, the third waveform parameter sequence by using the first key, to obtain an encrypted third waveform parameter sequence.

6. The method according to any one of claims 3 to 5, wherein a length of the first waveform parameter sequence is 14 bits.

7. The method according to any one of claims 2 to 5, wherein a length of the first key is 256 bits or 128 bits.

8. The method according to any one of claims 1 to 7, wherein the modulating, by a first communication apparatus, a first signal based on waveform information, to obtain a second signal comprises:

performing, by the first communication apparatus, constellation mapping on the first signal, to obtain a first signal obtained through the constellation mapping; and
modulating, by the first communication apparatus by using a modulation matrix, the first signal obtained through the constellation mapping, to obtain the second signal, wherein a parameter of the modulation matrix comprises the first waveform parameter and a second waveform parameter.

9. The method according to claim 8, wherein the modulation matrix meets the following formula:

$$\Phi_{M \times N}(c1, c2) = e^{j2\pi(c1m^2 + c2n^2 + nm/N)}/\sqrt{N},$$

wherein $\Phi_{M \times N}(c1, c2)$ represents the modulation matrix, $M \times N$ represents a size of the modulation matrix, both M and N are positive integers, $M$ is a quantity of rows of the modulation matrix, $N$ is a quantity of columns of the modulation matrix, $m$ is a row index of the modulation matrix, $n$ is a column index of the modulation matrix, c1 is the first waveform parameter, c2 is the second waveform parameter, and $j$ is a unit of an imaginary part.

10. The method according to claim 8 or 9, wherein the waveform information further comprises the second waveform parameter, and the second waveform parameter is non-public.

11. A communication method, comprising:

receiving, by a second communication apparatus, a third signal from a first communication apparatus, wherein the third signal is a signal obtained after a second signal passes through a transmission channel, the second signal is obtained by modulating a first signal based on waveform information, the waveform information comprises a first waveform parameter, and the first waveform parameter is non-public; and
demodulating, by the second communication apparatus, the third signal based on the waveform information, to obtain a fourth signal.

12. The method according to claim 11, wherein before the demodulating, by the second communication apparatus, the third signal based on the waveform information, to obtain a fourth signal, the method further comprises:

receiving, by the second communication apparatus, an encrypted first waveform parameter sequence from the first communication apparatus, wherein a first waveform parameter sequence is obtained by performing quantization on the first waveform parameter; and
decrypting, by the second communication apparatus, the encrypted first waveform parameter sequence by using a first key, to obtain the first waveform parameter sequence, and converting the first waveform parameter sequence to obtain the first waveform parameter.

13. The method according to claim 12, wherein before the decrypting, by the second communication apparatus, the encrypted first waveform parameter sequence by using a first key, the method further comprises: receiving, by the second communication apparatus, first indication information from the first communication apparatus, wherein the first indication information indicates a start bit of a decryption key that is of the encrypted first waveform parameter sequence and that is in the first key.

14. The method according to claim 13, wherein the decrypting, by the second communication apparatus, the encrypted first waveform parameter sequence by using a first key, to obtain the first waveform parameter sequence comprises: decrypting, by the second communication apparatus based on the first indication information, the encrypted first waveform parameter sequence by selecting a part of the first key as the decryption key, to obtain the first waveform parameter sequence.

**15.** The method according to claim 11, wherein the method further comprises:

receiving, by the second communication apparatus, an encrypted third waveform parameter sequence from the first communication apparatus, wherein a third waveform parameter sequence is obtained based on cycling of a first waveform parameter sequence, and the first waveform parameter sequence is obtained by performing quantization on the first waveform parameter;

decrypting, by the second communication apparatus, the encrypted third waveform parameter sequence by using a first key, to obtain the third waveform parameter sequence; and

determining, by the second communication apparatus, the first waveform parameter sequence from the third waveform parameter sequence, and converting the first waveform parameter sequence to obtain the first waveform parameter.

**16.** The method according to any one of claims 12 to 15, wherein a length of the first waveform parameter sequence is 14 bits.

**17.** The method according to any one of claims 12 to 15, wherein a length of the first key is 256 bits or 128 bits.

**18.** The method according to any one of claims 11 to 17, wherein the demodulating, by the second communication apparatus, the third signal based on the waveform information, to obtain a fourth signal comprises:

demodulating, by the second communication apparatus, the third signal by using a demodulation matrix, to obtain a demodulated third signal, wherein a parameter of the demodulation matrix comprises the first waveform parameter and a second waveform parameter; and

performing, by the second communication apparatus, constellation mapping on the demodulated third signal, to obtain the fourth signal.

**19.** The method according to claim 17 or 18, wherein the waveform information further comprises the second waveform parameter, and the second waveform parameter is non-public.

**20.** A communication apparatus, comprising a transceiver module and a processing module, wherein

the processing module is configured to modulate a first signal based on waveform information, to obtain a second signal, wherein the waveform information comprises a first waveform parameter, and the first waveform parameter is non-public; and

the transceiver module is configured to send the second signal to a second communication apparatus.

**21.** The apparatus according to claim 20, wherein the processing module is further configured to: before the transceiver module sends the second signal to the second communication apparatus, encrypt the first waveform parameter by using a first key, to obtain an encrypted first waveform parameter; and send the encrypted first waveform parameter to the second communication apparatus via the transceiver module.

**22.** The apparatus according to claim 21, wherein when encrypting the first waveform parameter by using the first key, to obtain the encrypted first waveform parameter, the processing module is specifically configured to:

perform quantization on the first waveform parameter, to obtain a first waveform parameter sequence; and encrypt the first waveform parameter sequence by using a part of the first key as an encryption key, to obtain an encrypted first waveform parameter sequence.

**23.** The apparatus according to claim 22, the transceiver module is further configured to indicate a start bit of the encryption key in the first key to the second communication apparatus.

**24.** The apparatus according to claim 21, wherein when encrypting the first waveform parameter by using the first key, to obtain the encrypted first waveform parameter, the processing module is specifically configured to:

perform quantization on the first waveform parameter, to obtain a first waveform parameter sequence;

perform cycling on the first waveform parameter sequence, to obtain a third waveform parameter sequence; and

encrypt the third waveform parameter sequence by using the first key, to obtain an encrypted third waveform parameter sequence.

**25.** The apparatus according to any one of claims 22 to 24, wherein a length of the first waveform parameter sequence is 14 bits.

**26.** The apparatus according to any one of claims 21 to 24, wherein a length of the first key is 256 bits or 128 bits.

**27.** The apparatus according to any one of claims 20 to 26, wherein when modulating the first signal based on the waveform information, to obtain the second signal, the processing module is specifically configured to:

perform constellation mapping on the first signal, to obtain a first signal obtained through the constellation mapping; and
modulate, by using a modulation matrix, the first signal obtained through the constellation mapping, to obtain the second signal, wherein a parameter of the modulation matrix comprises the first waveform parameter and a second waveform parameter.

**28.** The apparatus according to claim 27, wherein the modulation matrix meets the following formula:

$$\Phi_{M \times N}(c1, c2) = e^{j2\pi(c1m^2 + c2n^2 + nm/N)} / \sqrt{N},$$

wherein $\Phi_{M \times N}(c1, c2)$ represents the modulation matrix, $M \times N$ represents a size of the modulation matrix, both M and N are positive integers, $M$ is a quantity of rows of the modulation matrix, $N$ is a quantity of columns of the modulation matrix, $m$ is a row index of the modulation matrix, $n$ is a column index of the modulation matrix, c1 is the first waveform parameter, c2 is the second waveform parameter, and $j$ is a unit of an imaginary part.

**29.** The apparatus according to claim 27 or 28, wherein the waveform information further comprises the second waveform parameter, and the second waveform parameter is non-public.

**30.** A communication apparatus, comprising a transceiver module and a processing module, wherein

the transceiver module is configured to receive a third signal from a first communication apparatus, wherein the third signal is a signal obtained after a second signal passes through a transmission channel, the second signal is obtained by modulating a first signal based on waveform information, the waveform information comprises a first waveform parameter, and the first waveform parameter is non-public; and
the processing module is configured to demodulate the third signal based on the waveform information, to obtain a fourth signal.

**31.** The apparatus according to claim 30, wherein the processing module is further configured to: before demodulating the third signal based on the waveform information, to obtain the fourth signal, receive, via the transceiver module, an encrypted first waveform parameter sequence from the first communication apparatus, wherein a first waveform parameter sequence is obtained by performing quantization on the first waveform parameter; and decrypt the encrypted first waveform parameter sequence by using a first key, to obtain the first waveform parameter sequence, and convert the first waveform parameter sequence to obtain the first waveform parameter.

**32.** The apparatus according to claim 31, wherein the transceiver module is further configured to: before the processing module decrypts the encrypted first waveform parameter sequence by using the first key, receive first indication information from the first communication apparatus, wherein the first indication information indicates a start bit of a decryption key that is of the encrypted first waveform parameter sequence and that is in the first key.

**33.** The apparatus according to claim 32, wherein when decrypting the encrypted first waveform parameter sequence by using the first key, to obtain the first waveform parameter sequence, the processing module is specifically configured to: decrypt, based on the first indication information, the encrypted first waveform parameter sequence by selecting a part of the first key as the decryption key, to obtain the first waveform parameter sequence.

**34.** The apparatus according to claim 30, wherein the processing module is further configured to: receive, via the transceiver module, an encrypted third waveform parameter sequence from the first communication apparatus, wherein a third waveform parameter sequence is obtained based on cycling of a first waveform parameter sequence, and the first waveform parameter sequence is obtained by performing quantization on the first waveform parameter; decrypt the encrypted third waveform parameter sequence by using a first key, to obtain the third waveform parameter sequence; and determine the first waveform parameter sequence from the third waveform parameter sequence, and convert the first waveform parameter sequence to obtain the first waveform parameter.

35. The apparatus according to any one of claims 31 to 34, wherein a length of the first waveform parameter sequence is 14 bits.

36. The apparatus according to any one of claims 31 to 34, wherein a length of the first key is 256 bits or 128 bits.

37. The apparatus according to any one of claims 30 to 36, wherein when demodulating the third signal based on the waveform information, to obtain the fourth signal, the processing module is specifically configured to:

demodulate the third signal by using a demodulation matrix, to obtain a demodulated third signal, wherein a parameter of the demodulation matrix comprises the first waveform parameter and a second waveform parameter; and
perform constellation mapping on the demodulated third signal, to obtain the fourth signal.

38. The apparatus according to claim 36 or 37, wherein the waveform information further comprises the second waveform parameter, and the second waveform parameter is non-public.

39. A communication apparatus, comprising a processor coupled to a storage, wherein the storage is configured to store a computer program, the processor is configured to execute the computer program stored in the storage, to enable the communication apparatus to perform the method according to any one of claims 1 to 10, or enable the communication apparatus to perform the method according to any one of claims 11 to 19.

40. A computer-readable storage medium, storing a computer program, wherein when the computer program is run on a processor, the method according to any one of claims 1 to 10 is performed, or the method according to any one of claims 11 to 19 is performed.

41. A computer program product comprising instructions, wherein when the instructions are run on a computer, the method according to any one of claims 1 to 10 is performed, or the method according to any one of claims 11 to 19 is performed.

42. A communication system, comprising a first communication apparatus configured to perform the method according to any one of claims 1 to 10 and a second communication apparatus configured to perform the method according to any one of claims 11 to 19.

First communication
apparatus

Second communication
apparatus

t1

Uplink ranging signal

t2

Downlink ranging signal

t3

t4

FIG. 1

N

| Ranging signal | ZP |
| --- | --- |

M

P

N–M–P

Time
advance

Perform illegal
obtaining

Calculate time and
estimate all waveforms

An attacker
transmits a
waveform

FIG. 2

Attack
peak

Legal
peak

Time

FIG. 3

First communication apparatus

Second communication apparatus

S401A: Modulate a first signal based on waveform information, to obtain a second signal

S402A: Send the second signal (which passes through a transmission channel to be a third signal)

S403A: Demodulate the third signal based on the waveform information, to obtain a fourth signal

FIG. 4A

First communication apparatus

Second communication apparatus

S401B: Encrypt a waveform parameter by using a first key, to obtain an encrypted waveform parameter

S402B: Encrypted waveform parameter

S403B: Decrypt the encrypted waveform parameter by using the first key, to obtain the waveform parameter

FIG. 4B

| First communication apparatus |
| --- |

| Second communication apparatus |
| --- |

S501: Perform quantization on a waveform parameter, to obtain a waveform parameter sequence

S502: Construct a message sequence M based on the waveform parameter sequence

S503: Encrypt the waveform parameter sequence by using a first key, to obtain an encrypted waveform parameter sequence

S504: Send the encrypted waveform parameter sequence

S505: Decrypt the encrypted waveform parameter sequence by using the first key, to obtain the waveform parameter sequence before the encryption

FIG. 5A

| Message sequence M (42 bits) | First sequence (7 bits) | C1 (14 bits) | Second sequence (7 bits) | C2 (14 bits) |
| --- | --- | --- | --- | --- |

(a)

| Message sequence L (42 bits) | Encrypted first sequence (7 bits) | Encrypted C1 (14 bits) | Encrypted second sequence (7 bits) | Encrypted C2 (14 bits) |
| --- | --- | --- | --- | --- |

(b)

FIG. 5B

First communication apparatus

Second communication apparatus

S601: Perform parameter quantization on a waveform parameter, to obtain a waveform parameter sequence

S602: Perform cycling on the beam parameter sequence, to obtain a third waveform parameter sequence C3

S603: Encrypt the third waveform parameter sequence C3 by using a first key, to obtain an encrypted third waveform parameter sequence C3

S604: Send encrypted C3

S605: Decrypt encrypted C3 by using the first key, to obtain C3, and determine C1 and C2 from C3

FIG. 6A

| First waveform parameter sequence C1 (14 bits) | Second waveform parameter sequence C2 (14 bits) | ... | First waveform parameter sequence C1 (14 bits) | Second waveform parameter sequence C2 (14 bits) |
|---|---|---|---|---|

Third waveform parameter sequence C3 (128 bits)

FIG. 6B

FIG. 7A

FIG. 7B

FIG. 7C

```
┌─────────────────────┐              ┌─────────────────────┐
│  First communication│              │ Second communication│
│      apparatus      │              │      apparatus      │
└─────────────────────┘              └─────────────────────┘
            │                                    │
            ▼                                    │
┌─────────────────────┐                          │
│S801: Modulate a first signal                   │
│ based on waveform   │                          │
│ information, to obtain a                        │
│    second signal    │                          │
└─────────────────────┘                          │
            │                                     │
            │   S802: Send the second signal      │
            │  (which passes through a channel    │
            │      to be a third signal)          │
            │─────────────────────────────────────▶
            │                                     ▼
            │                          ┌─────────────────────┐
            │                          │ S803: Demodulate the│
            │                          │ third signal based on the
            │                          │ waveform information, to
            │                          │  obtain a fourth signal
            │                          └─────────────────────┘
            │                                     │
            ▼                                     ▼
```

FIG. 8A

(a)

(b)

FIG. 8B

Communication apparatus 900

902

Transceiver module

901

Processing module

903

Storage module

FIG. 9

Communication apparatus 1000

1010

1020

Processor

Transceiver

Transmitter machine 1101

Antenna 1013

1030

Receiver machine 1012

Storage

FIG. 10

Communication apparatus 1100

Processor 1102

Interface circuit 1101

Storage 1103

FIG. 11

## INTERNATIONAL SEARCH REPORT

International application No.

**PCT/CN2022/144363**

**A. CLASSIFICATION OF SUBJECT MATTER**

H04W12/03(2021.01)i;H04W12/041(2021.01)i

According to International Patent Classification (IPC) or to both national classification and IPC

**B. FIELDS SEARCHED**

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNTXT; CNABS; CNKI; VEN; USTXT; EPTXT; WOTXT; 3GPP: 安全, 波形参数, 测距, 测量, 测试, 测速, 调制, 非公开, 攻击, 基站, 加密, 减小距离, 提前检测, 网络设备, 延迟发送, 载波, 终端, modulate, ranging, encrypt, carrier wave, attack, distance measuring

**C. DOCUMENTS CONSIDERED TO BE RELEVANT**

| Category* | Citation of document, with indication, where appropriate, of the relevant passages | Relevant to claim No. |
|---|---|---|
| X | CN 107920351 A (BEIJING SATELLITE INFORMATION ENGINEERING INSTITUTE) 17 April 2018 (2018-04-17) description, paragraphs [0023]-[0041] | 1-42 |
| Y | CN 111800783 A (SOUTH-CENTRAL UNIVERSITY FOR NATIONALITIES) 20 October 2020 (2020-10-20) description, paragraphs [0044]-[0088] | 1-42 |
| Y | US 9191252 B1 (L-3 COMMUNICATIONS CORP.) 17 November 2015 (2015-11-17) description, column 2, line 47-column 21, line 4 | 1-42 |
| A | US 10914814 B1 (DIALOG SEMICONDUCTOR B.V.) 09 February 2021 (2021-02-09) entire document | 1-42 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **10 March 2023** | **16 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/144363**

| Patent document cited in search report | | | Publication date (day/month/year) | Patent family member(s) | | | Publication date (day/month/year) |
|---|---|---|---|---|---|---|---|
| CN | 107920351 | A | 17 April 2018 | None | | | |
| CN | 111800783 | A | 20 October 2020 | CN | 111800783 | B | 30 April 2021 |
| US | 9191252 | B1 | 17 November 2015 | None | | | |
| US | 10914814 | B1 | 09 February 2021 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210029075